# EUROPEAN PATENT SPECIFICATION

(11) **EP 4 560 450 B1**
(45) Date of publication and mention of the grant of the patent: **30.09.2026**
(21) Application number: 23887566.0
(22) Date of filing: 15.08.2023
(51) Int. Cl.: G06F 3/04845, G06F 3/0484, G09G 5/00

(54) **DATA PROCESSING METHOD, DEVICE, AND STORAGE MEDIUM**
DATENVERARBEITUNGSVERFAHREN, VORRICHTUNG UND SPEICHERMEDIUM
PROCÉDÉ DE TRAITEMENT DE DONNÉES, DISPOSITIF ET SUPPORT DE STOCKAGE

(30) Priority: 07.11.2022 CN 202211382250
(43) Date of publication of application: 28.05.2025
(73) Proprietor: Honor Device Co., Ltd., Shenzhen, Guangdong 518040 (CN)
(72) Inventor: BAO, Zhixue, Shenzhen, Guangdong 518040 (CN); SUN, Wenyong, Shenzhen, Guangdong 518040 (CN)
(74) Representative: Thun, Clemens
(86) International application number: PCT/CN2023/113128
(87) International publication number: WO 2024/098871

(56) References cited:
- WO-A1-2019/047956
- CN-A- 113 254 120
- CN-A- 114 579 075
- CN-A- 114 764 357

## Description

This application claims priority to Chinese Patent Application CN 117 991 961 A (Application No. 202211382250.7), filed with the China National Intellectual Property Administration on November 7, 2022 and entitled "DATA PROCESSING METHOD, DEVICE, AND STORAGE MEDIUM".

### TECHNICAL FIELD

This application relates to the field of image display technologies, and in particular, to a data processing method, a terminal device, and a computer-readable storage medium.

### BACKGROUND

Currently, a user may view various types of content by using a display screen of a terminal device. When there is a lot of content, the display screen cannot display all content at a time. The terminal device may control, in response to a sliding operation performed by the user on the display screen, displayed content to perform uninterrupted or interrupted sliding, to facilitate the user in browsing related content. Drawing and rendering, composition, display, and other stages need to be performed before the content can be finally presented on the display screen.

However, when a lot of content needs to be displayed, drawing and rendering may time out, and a frame loss may occur. Therefore, composition and display image cycles are not fixed, and an image is not obtained based on continuous frames, and consequently, an abnormal phenomenon such as display freezing or jumping occurs in content displayed on the display screen.

WO 2019/047956 A1 discloses a method for improving image fluency. The method comprises: when a vertical synchronous signal sent by a display arrives, starting to process current frame data; if the processing of the current frame data is not completed in a vertical synchronous signal period, continuing to process the current frame data in a predetermined delay duration; and if the processing of the current frame data is still not completed in the predetermined delay duration, abandoning the processing of the current frame data, and continuing to display the previous frame of image on the display.

### SUMMARY

To resolve the foregoing technical problem, this application provides a data processing method, a terminal device, and a computer-readable storage medium, to resolve a freezing or jumping phenomenon caused by drawing and rendering timeout and a frame loss. The invention is defined in the independent claims. Additional features of the invention are provided in the dependent claims. In the following, parts of the description and drawings referring to embodiments, which are not covered by the claims, are not presented as embodiments of the invention but as examples useful for understanding the invention.

According to a first aspect, this application provides a data processing method. The method includes: displaying a first interface of a first application; in response to a sliding operation acting on the first interface, obtaining an input event corresponding to the sliding operation; obtaining a first VSync signal, and drawing and rendering an N^{th} frame based on a first MOVE event, where the first MOVE event is extracted, based on a timestamp of the first VSync signal, from the input event corresponding to the sliding operation; when drawing and rendering duration of the N^{th} frame is greater than one VSync signal cycle, after the drawing and rendering of the N^{th} frame are completed, obtaining a quantity of lost frames, and displaying the N^{th} frame; selecting a minimum value from the quantity of lost frames and a specified maximum quantity of interpolable frames as a quantity M of to-be-interpolated frames; and drawing and rendering M frames based on a second MOVE event before a second VSync signal arrives, and displaying the M frames. The second VSync signal is the first VSync signal received after the drawing and rendering of the N^{th} frame are completed, and the second MOVE event is extracted, based on timestamps of all or some VSync signals received in a process of drawing and rendering the N^{th} frame, from the input event corresponding to the sliding operation.

Therefore, when drawing and rendering time out, supplementation is performed for one or more lost frames in a frame supplementation manner, to reduce a frame loss caused by a VSync signal miss due to drawing and rendering timeout so that content displayed on a display screen can smoothly change, to improve display smoothness, and reduce jumping, thereby further improving user experience.

According to the first aspect, the obtaining a quantity of lost frames includes: determining first time at which the drawing and rendering of the N^{th} frame begin and second time at which the drawing and rendering of the N^{th} frame end; and calculating the quantity of lost frames based on the first time, the second time, and specified drawing and rendering duration corresponding to the N^{th} frame, where the specified drawing and rendering duration is one VSync signal cycle.

For example, the first time is, for example, Tbegin described below, the second time is, for example, Tend described below, the specified drawing and rendering duration is, for example, one VSync signal cycle, namely, VSync described below, and the quantity of lost frames is, for example, M described below.

According to any one of the first aspect or the foregoing implementation of the first aspect, the quantity of lost frames is calculated according to the following formula based on the first time, the second time, and the specified drawing and rendering duration corresponding to the N^{th} frame: Quantity of lost frames = floor[(second time - first time)/VSync signal cycle] - 1.

According to any one of the first aspect or the foregoing implementations of the first aspect, the selecting a minimum value from the quantity of lost frames and a specified maximum quantity of interpolable frames as a quantity M of to-be-interpolated frames includes: determining receiving time of the second VSync signal based on the VSync signal cycle; determining, based on drawing and rendering duration of N frames whose drawing and rendering are completed, average drawing and rendering duration of each of the N frames whose drawing and rendering are completed; calculating a predicted quantity of interpolable frames based on the receiving time, the second time, and the average drawing and rendering duration; and selecting a minimum value from the predicted quantity of interpolable frames, the quantity of lost frames, and the specified maximum quantity of interpolable frames as the quantity M of to-be-interpolated frames.

For example, the receiving time is, for example, TnextVsyn described below, the average drawing and rendering duration is, for example, T average described below, and the predicted quantity of interpolable frames is, for example, countAllow described below.

According to any one of the first aspect or the foregoing implementations of the first aspect, the predicted quantity of interpolable frames is calculated based on the 3 receiving time, the second time, and the average drawing and rendering duration according to the following formula: Predicted quantity of interpolable frames ≤ (receiving time - second time)/average drawing and rendering duration.

For example, an integer part of the predicted quantity of interpolable frames is taken.

According to any one of the first aspect or the foregoing implementations of the first aspect, the method further includes: when the first application is cold started, obtaining a package name of the first application; determining an application type of the first application based on the package name; and when the application type of the first application matches a specified application type that supports frame interpolation, when the drawing and rendering duration of the N^{th} frame is greater than one VSync signal cycle, after the drawing and rendering of the N^{th} frame are completed, performing the steps of obtaining a quantity of lost frames, selecting a minimum value from the quantity of lost frames and a specified maximum quantity of interpolable frames as a quantity of to-be-interpolated frames, and drawing and rendering M frames based on a second MOVE event before a second VSync signal arrives.

Therefore, a data processing process can be accelerated, and unnecessary frame interpolation processing can be reduced.

According to any one of the first aspect or the foregoing implementations of the first aspect, the method further includes: determining, based on reporting point information corresponding to the input event, a control that is in the first interface and on which the input event acts; and when the control that is acted on is a RecyclerView control or a ListView control, when the drawing and rendering duration of the N^{th} frame is greater than one VSync signal cycle, after the drawing and rendering of the N^{th} frame are completed, performing the steps of obtaining a quantity of lost frames, selecting a minimum value from the quantity of lost frames and a specified maximum quantity of interpolable frames as a quantity of to-be-interpolated frames, and drawing and rendering M frames based on a second MOVE event before a second VSync signal arrives.

Therefore, a data processing process can be accelerated, and unnecessary frame interpolation processing can be reduced.

According to any one of the first aspect or the foregoing implementations of the first aspect, the method further includes: in the process of drawing and rendering the N^{th} frame, determining a quantity of layers that need to be drawn and rendered; and when the quantity of layers is 1, when the drawing and rendering duration of the N^{th} frame is greater than one VSync signal cycle, after the drawing and rendering of the N^{th} frame are completed, performing the steps of obtaining a quantity of lost frames, selecting a minimum value from the quantity of lost frames and a specified maximum quantity of interpolable frames as a quantity of to-be-interpolated frames, and drawing and rendering M frames based on a second MOVE event before a second VSync signal arrives.

Therefore, a data processing process can be accelerated, and unnecessary frame interpolation processing can be reduced.

According to any one of the first aspect or the foregoing implementations of the first aspect, the method further includes: when a sliding distance corresponding to a MOVE event extracted, based on timestamps of two adjacent VSync signals, from the input event corresponding to the sliding operation is greater than a minimum sliding distance threshold, when the drawing and rendering duration of the N^{th} frame is greater than one VSync signal cycle, after the drawing and rendering of the N^{th} frame are completed, performing the steps of obtaining a quantity of lost frames, selecting a minimum value from the quantity of lost frames and a specified maximum quantity of interpolable frames as a quantity of to-be-interpolated frames, and drawing and rendering M frames based on a second MOVE event before a second VSync signal arrives.

Therefore, a data processing process can be accelerated, and unnecessary frame interpolation processing can be reduced.

According to any one of the first aspect or the foregoing implementations of the first aspect, the method further includes: when the drawing and rendering duration of the N^{th} frame is not greater than one VSync signal cycle, and the N^{th} frame is the first frame of a drawing and rendering operation, after the drawing and rendering of the N^{th} frame are completed, offsetting the N^{th} frame by a specified offset, to obtain an (N+1)^{th} frame; and drawing and rendering the (N+1)^{th} frame before the second VSync signal arrives, and displaying the (N+1)^{th} frame.

For example, when the N^{th} frame is the first frame, for example, the frame 1 described below, the (N+1)^{th} frame is the frame 1' described below.

Therefore, in an initial period of the sliding operation, one frame is interpolated in advance for drawing and rendering, so that one more frame is buffered in a buffer queue, to reduce frameless composition cases caused by subsequent drawing and rendering timeout, and reduce display freezing. For example, when only one frame is lost, smooth transition can be implemented by using the interpolated frame, without freezing, thereby improving user experience.

According to any one of the first aspect or the foregoing implementations of the first aspect, the method further includes: when an event extracted, based on a timestamp of a third VSync signal, from the input event corresponding to the sliding operation is a DOWN event, determining that the N^{th} frame is the first frame of the drawing and rendering operation. The third VSync signal is a VSync signal that is received before the first VSync signal and that is adjacent to the first VSync signal.

According to a second aspect, this application provides a terminal device. The terminal device includes a memory and a processor, where the memory is coupled to the processor, the memory stores program instructions, and when the program instructions are executed by the processor, the terminal device is enabled to perform instructions of the method according to any one of the first aspect or the implementations of the first aspect.

Any one of the second aspect or implementations of the second aspect respectively corresponds to any one of the first aspect or the implementations of the first aspect. For technical effects corresponding to any one of the second aspect or the implementations of the second aspect, refer to the technical effects corresponding to any one of the first aspect or the implementations of the first aspect. Details are not described herein again.

According to a third aspect, this application provides a computer-readable medium, configured to store a computer program. The computer program includes instructions for performing the method according to any one of the first aspect or the implementations of the first aspect.

Any one of the third aspect or implementations of the third aspect respectively corresponds to any one of the first aspect or the implementations of the first aspect. For technical effects corresponding to any one of the third aspect or the implementations of the third aspect, refer to the technical effects corresponding to any one of the first aspect or the implementations of the first aspect. Details are not described herein again.

According to a fourth aspect, this application provides a computer program. The computer program includes instructions for performing the method according to any one of the first aspect or the implementations of the first aspect.

Any one of the fourth aspect or implementations of the fourth aspect respectively corresponds to any one of the first aspect or the implementations of the first aspect. For technical effects corresponding to any one of the fourth aspect or the implementations of the fourth aspect, refer to the technical effects corresponding to any one of the first aspect or the implementations of the first aspect. Details are not described herein again.

According to a fifth aspect, this application provides a chip. The chip includes a processing circuit and a transceiver pin. The transceiver pin and the processing circuit communicate with each other through an internal connection path. The processing circuit performs the method according to any one of the first aspect or the implementations of the first aspect, to control a receive pin to receive a signal, and control a transmit pin to transmit a signal.

Any one of the fifth aspect or implementations of the fifth aspect respectively corresponds to any one of the first aspect or the implementations of the first aspect. For technical effects corresponding to any one of the fifth aspect or the implementations of the fifth aspect, refer to the technical effects corresponding to any one of the first aspect or the implementations of the first aspect. Details are not described herein again.

### BRIEF DESCRIPTION OF DRAWINGS

FIG. 1 is an example schematic diagram of a hardware structure of a terminal device;
FIG. 2 is an example schematic diagram of a software structure of a terminal device;
FIG. 3 is an example schematic diagram of an application scenario;
FIG. 4 is an example schematic diagram of an application scenario;
FIG. 5 is an example schematic diagram of a data processing procedure;
FIG. 6 is an example schematic diagram of a flow direction of a data frame in a data processing process;
FIG. 7 is an example schematic diagram of a change in interface display content in a case in which no frame is lost;
FIG. 8 is an example schematic diagram of a data processing procedure in a case in which one frame of data is lost;
FIG. 9 is an example schematic diagram of a change in interface display content in a case in which one frame of data is lost;
FIG. 10 is an example schematic diagram of a data processing procedure in a case in which a plurality of frames of data are continuously lost;
FIG. 11 is an example schematic diagram of a change in interface display content in a case in which a plurality of frames of data are continuously lost;
FIG. 12 is an example schematic diagram of functional modules involved in a data processing method according to an embodiment of this application;
FIG. 13A and FIG. 13B are an example sequence diagram of an interaction process between functional modules involved in a data processing method according to an embodiment of this application;
FIG. 14 is an example schematic diagram of a data processing procedure for performing first-frame interpolation;
FIG. 15 is an example schematic diagram of a data processing procedure for performing frame supplementation when one frame is lost;
FIG. 16 is an example schematic diagram of a data processing procedure for performing first-frame interpolation and performing frame supplementation when one frame is lost;
FIG. 17 is an example schematic diagram of a data processing procedure for performing first-frame interpolation and performing frame supplementation when a plurality of frames are continuously lost;
FIG. 18 is an example schematic diagram of another data processing procedure for performing first-frame interpolation and performing frame supplementation when a plurality of frames are continuously lost;
FIG. 19 is an example flowchart of a data processing method according to an embodiment of this application;
FIG. 20 is an example schematic diagram of specific processing operations included in drawing, rendering, and composition stages;
FIG. 21 is an example flowchart of another data processing method according to an embodiment of this application;
FIG. 22 is an example schematic diagram of a first interface of a first application; and
FIG. 23 is another example schematic diagram of a first interface of a first application.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by persons of ordinary skill in the art based on embodiments of this application without creative efforts shall fall within the protection scope of this application.

The term "and/or" in this specification describes only an association relationship between associated objects and indicates that three relationships may exist. For example, A and/or B may indicate the following three cases: Only A exists, both A and B exist, and only B exists.

In the specification and claims of embodiments of this application, the terms such as "first" and "second" are intended to distinguish between different objects, but are not intended to describe a particular order of the objects. For example, a first target object, a second target object, and the like are intended to distinguish between different target objects, but are not intended to describe a particular order of the objects.

In embodiments of this application, words such as "an example" or "for example" are used to represent giving an example, an illustration, or a description. Any embodiment or design solution described as "an example" or "for example" in embodiments of this application should not be explained as being more preferred or having more advantages than another embodiment or design solution. Exactly, use of the words such as "an example" or "for example" is intended to present a relative concept in a specific manner.

In the descriptions of embodiments of this application, unless otherwise stated, "a plurality of" means two or more. For example, a plurality of processing units are two or more processing units; and a plurality of systems are two or more systems.

To better understand the technical solutions provided in embodiments of this application, before the technical solutions in embodiments of this application are described, a hardware structure of a terminal device (such as a mobile phone, a tablet computer, or a touchable PC) applicable to embodiments of this application is first described with reference to the accompanying drawings.

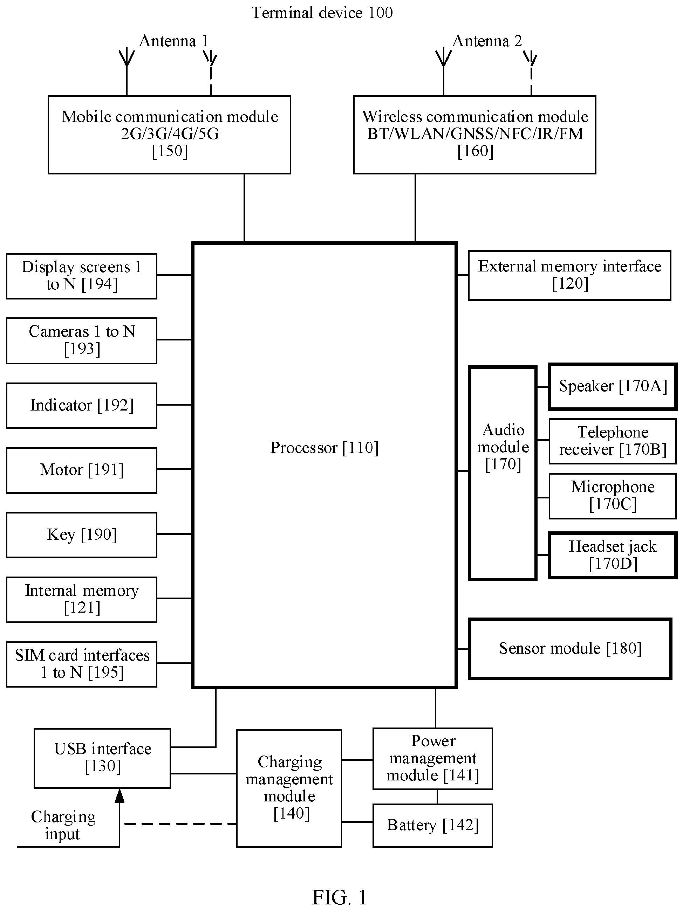

Referring to FIG. 1, a terminal device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a telephone receiver 170B, a microphone 170C, a headset jack 170D, a sensor module 180, a key 190, a motor 191, an indicator 192, a camera 193, a display screen 194, a subscriber identity module (subscriber identification module, SIM) card interface 195, and the like.

For example, in some implementations, the sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like. Examples are not listed one by one herein. This is not limited in this embodiment of this application.

Based on the foregoing sensors, in a process of using the terminal device, when a user performs an operation, such as clicking, double clicking, sliding, or uninterrupted sliding, on the display screen 194, the currently performed operation, a position on which the operation acts, reporting point information of the position, and the like may be accurately determined. Specifically, in the technical solutions provided in this application, an uninterrupted sliding operation is used as an example, and a data processing procedure in a process of the operation is specifically described. For specific details of a data processing method generated for the uninterrupted sliding operation, refer to the following descriptions. Details are not described herein.

It should be noted that, the uninterrupted sliding is behavior in which a user moves on a display screen by using a finger or a stylus in an application, so that content displayed on a current interface changes.

In addition, it should be noted that, the processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

In addition, it should be further noted that, a memory may be further disposed in the processor 110, and is configured to store instructions and data. In some implementations, the memory in the processor 110 is a cache. The memory may store an instruction or data that is just used or cyclically used by the processor 110. If the processor 110 needs to reuse the instruction or the data, the processor 110 may directly invoke the instruction or the data from the memory. This avoids repeated access and reduces waiting time of the processor 110, thereby improving system efficiency.

Still referring to FIG. 1, for example, the charging management module 140 is configured to receive charging input from a charger. The power management module 141 is configured to be connected to the battery 142, the charging management module 140, and the processor 110. The power management module 141 receives input from the battery 142 and/or the charging management module 140, and supplies power to the processor 110, the internal memory 121, the external memory, the display screen 194, the camera 193, the wireless communication module 160, and the like. The power management module 141 may be further configured to monitor parameters such as a battery capacity, a battery cycle count, and a battery health status (leakage or impedance).

Still referring to FIG. 1, for example, a wireless communication function of the terminal device 100 may be implemented by using the antenna 1, the antenna 2, the mobile communication module 150, the wireless communication module 160, the modem processor, the baseband processor, and the like. It should be noted that, the antenna 1 and the antenna 2 are configured to transmit and receive electromagnetic wave signals.

Still referring to FIG. 1, for example, the mobile communication module 150 may provide a solution that includes wireless communication such as 2G/3G/4G/5G and that is applied to the terminal device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit a processed electromagnetic wave to the modem processor for demodulation. The mobile communication module 150 may further amplify a signal obtained after the modem processor performs demodulation, and convert the signal into an electromagnetic wave through the antenna 1, for radiation. In some implementations, at least some functional modules in the mobile communication module 150 may be disposed in the processor 110. In some implementations, at least some functional modules in the mobile communication module 150 may be disposed in a same device as at least some modules in the processor 110.

In addition, it should be noted that, the modem processor may include a modulator and a demodulator. The modulator is configured to modulate a to-be-sent low-frequency baseband signal into a medium-high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then a processed signal is transferred to the application processor. The application processor outputs a sound signal through an audio device (not limited to the speaker 170A, the telephone receiver 170B, or the like), or displays an image or a video through the display screen 194. In some implementations, the modem processor may be an independent device. In some other implementations, the modem processor may be independent of the processor 110, and is disposed in a same device as the mobile communication module 150 or another functional module.

Still referring to FIG. 1, for example, the wireless communication module 160 may provide a solution that includes wireless communication such as a wireless local area network (wireless local area networks, WLAN) (such as a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, or an infrared (infrared, IR) technology and that is applied to the terminal device 100. The wireless communication module 160 may be one or more devices integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert a modulated and amplified signal into an electromagnetic wave through the antenna 2, for radiation.

In addition, it should be further noted that, the terminal device 100 implements a display function by using the GPU, the display screen 194, the application processor, and the like. The GPU is a microprocessor for image processing, and is connected to the display screen 194 and the application processor. The GPU is configured to perform mathematical and geometric computation, for image rendering. The processor 110 may include one or more GPUs, and the GPUs execute program instructions to generate or change display information.

Still referring to FIG. 1, for example, the display screen 194 is configured to display an image, a video, or the like. The display screen 194 includes a display panel. In some implementations, the terminal device 100 may include one or N display screens 194. N is a positive integer greater than 1.

In addition, it should be further noted that, the terminal device 100 may implement a photographing function by using the ISP, the camera 193, the video codec, the GPU, the display screen 194, the application processor, and the like.

Still referring to FIG. 1, for example, the external memory interface 120 may be configured to be connected to an external storage card, such as a Micro SD card, to expand a storage capability of the terminal device 100. The external storage card communicates with the processor 110 through the external memory interface 120, to implement a data storage function. For example, files such as music and a video are stored in the external storage card.

Still referring to FIG. 1, for example, the internal memory 121 may be configured to store computer-executable program code, and the executable program code includes instructions. The processor 110 runs the instructions stored in the internal memory 121, to perform various functional applications and data processing of the terminal device 100. The internal memory 121 may include a program storage area and a data storage area. The program storage area may store an operating system, an application program required by at least one function (for example, a voice playing function and an image playing function), and the like. The data storage area may store data (such as audio data and an address book) created in a process of using the terminal device 100, and the like. In addition, the internal memory 121 may include a high-speed random access memory, and may further include a nonvolatile memory, for example, at least one disk storage device, a flash storage device, or a universal flash storage (universal flash storage, UFS). The processor 110 runs the instructions stored in the internal memory 121 and/or the instructions stored in the memory disposed in the processor 110, to execute various functional applications of the terminal device and the data processing method provided in this application.

In addition, it should be further noted that, the terminal device 100 may implement an audio function, for example, music playing and recording, by using the audio module 170, the speaker 170A, the telephone receiver 170B, the microphone 170C, the headset jack 170D, the application processor, and the like.

Still referring to FIG. 1, for example, the key 190 includes a power key, a volume key, and the like. The key 190 may be a mechanical key, or may be a touch-type key. The terminal device 100 may receive key input, and generate key signal input related to a user setting and function control of the terminal device 100. The motor 191 may generate a vibration prompt. The indicator 192 may be an indicator light, and may be configured to indicate a charging status or a power change, or may be configured to indicate a message, a missed call, a notification, or the like.

Introduction to the hardware structure of the terminal device 100 concludes. It should be understood that, the terminal device 100 shown in FIG. 1 is merely an example. During specific implementation, the terminal device 100 may have more or fewer components than those shown in FIG. 1, may combine two or more components, or may have a different component configuration. The components shown in FIG. 1 may be implemented in hardware that includes one or more signal processors and/or application-specific integrated circuits, software, or a combination of hardware and software.

To better understand a software structure of the terminal device 100 shown in FIG. 1, the following describes the software structure of the terminal device 100. Before the software structure of the terminal device 100 is described, an architecture that may be used by a software system of the terminal device 100 is first described.

Specifically, during actual application, the software system of the terminal device 100 may use a layered architecture, an event-driven architecture, a microkernel architecture, a microservice architecture, or a cloud architecture.

In addition, it may be understood that, a software system currently used by a mainstream terminal device includes but is not limited to a Windows system, an Android system, and an iOS system. For ease of description, in embodiments of this application, an Android system of a layered architecture is used as an example to describe the software structure of the terminal device 100.

In addition, subsequently, the data processing solutions provided in embodiments of this application are also applicable to another system during specific implementation.

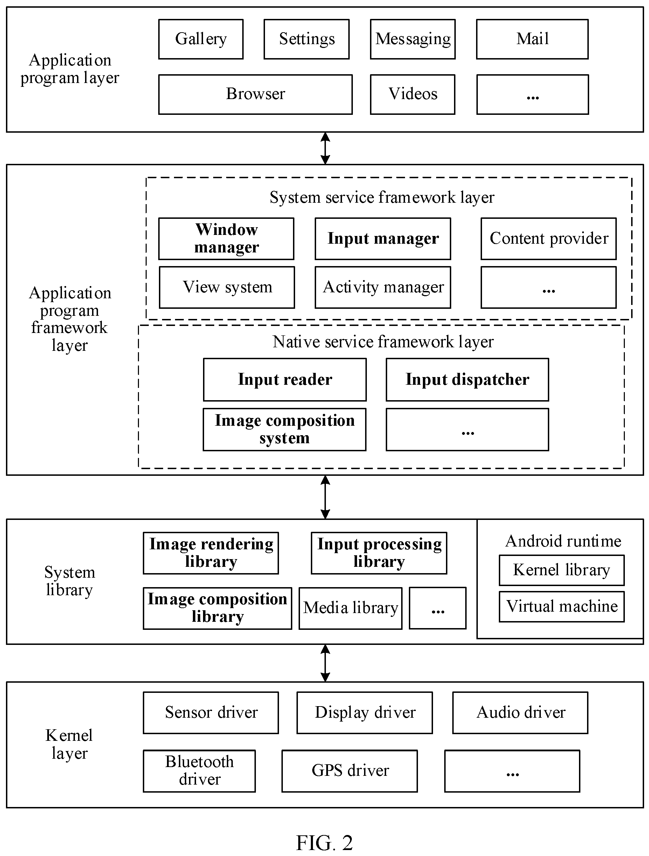

FIG. 2 is a block diagram of the software structure of the terminal device 100 in embodiments of this application.

As shown in FIG. 2, in a layered architecture of the terminal device 100, software is divided into several layers, and each layer has a clear role and task. The layers communicate with each other through a software interface. In some embodiments, the Android system is divided into four layers, namely, an application program layer, an application program framework layer, Android runtime (Android runtime) and a system library, and a kernel layer from top to bottom.

The application program layer may include a series of application program packages. As shown in FIG. 2, the application program packages may include application programs such as Gallery, Settings, Messaging, Mail, Browser, and Videos. Examples are not listed one by one herein. This is not limited in this application.

The application program framework layer provides application programming interfaces (application programming interface, API) and programming frameworks for the application programs at the application program layer. In some implementations, these programming interfaces and programming frameworks may be described as functions/services/frameworks or the like.

In addition, it should be noted that, the application program framework layer may be divided into a system service framework layer (usually referred to as a Framework layer, and implemented based on a Java language) and a native service framework layer (usually referred to as a native layer, and implemented based on a C or C + + language) based on implementation languages of the programming interfaces and programming frameworks managed by the application framework layer.

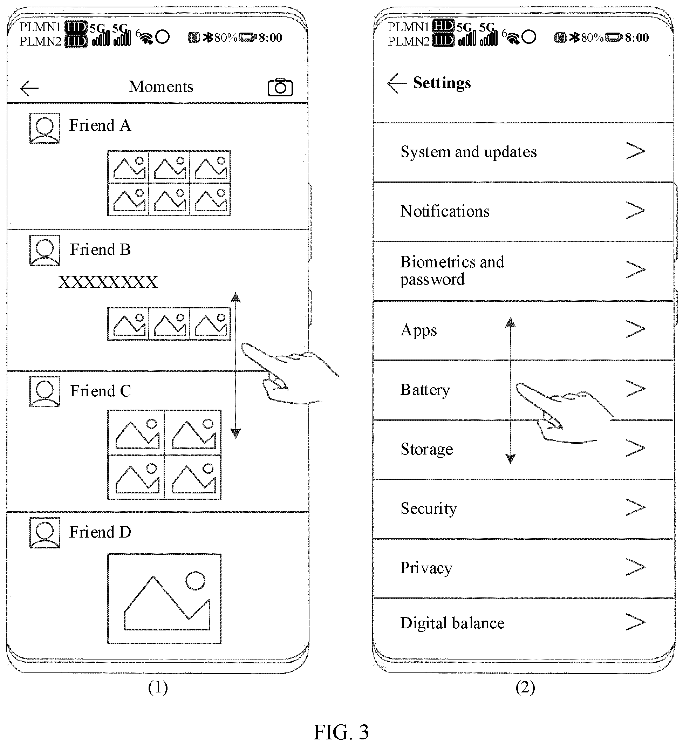

Still referring to FIG. 3, for example, the Framework layer may include a window manager, an input manager, a content provider, a view system, and an activity manager. Examples are not listed one by one herein. This is not limited in this application.

The window manager is configured to manage a window program. The window manager may obtain a display screen size, determine whether there is a status bar, lock a screen, and the like. Specifically, in the technical solutions provided in this application, the window manager is further configured to determine a focus window, to obtain information such as a focus window layer and a corresponding application program package name.

The input manager (InputManagerService) is configured to manage a program of an input device. For example, the input manager may determine input operations such as a mouse click operation, a keyboard input operation, and uninterrupted sliding. Specifically, in the technical solutions provided in this application, the input manager is mainly configured to determine an uninterrupted sliding operation.

The content provider is configured to store and obtain data, so that the data can be accessed by an application program. The data may include a video, an image, an audio, made and answered calls, a browsing history and bookmarks, an address book, and the like. Examples are not listed one by one herein. This is not limited in this application.

The view system includes a visual control such as a text display control or an image display control. The view system may be configured to construct an application program. A display interface may include one or more views. For example, a display interface including an SMS notification icon may include a text display view and an image display view.

The activity manager is configured to manage a lifecycle of each application program and a navigation back-off function, and is responsible for creating a main thread of Android and maintaining the lifecycle of each application program.

Still referring to FIG. 3, for example, the native layer may include an input reader, an input dispatcher, an image composition system, and the like. Examples are not listed one by one herein. This is not limited in this application.

It should be noted that, in a process of using the terminal device, the display screen calls an event monitoring port/function (EventHub) every several milliseconds based on a specified cycle. If an operation, for example, an uninterrupted sliding operation, (which may be considered as an event) performed by a user on the display screen is monitored, the event is reported to the input reader (InputReader). In other words, InputReader is configured to read an event from EventHub, or directly receive an event reported by EventHub.

In addition, after obtaining an event, InputReader sends the event to the input dispatcher (InputDispatcher).

After obtaining the event sent by InputReader, InputDispatcher delivers the event to a corresponding application program (hereinafter referred to as an application) through the input manager.

The image composition system, namely, a surface flinger (hereinafter represented as an SF thread), is configured to: control image composition, and generate a vertical synchronization (Vertical Synchronization, VSync) signal.

It may be understood that the SF thread includes a composition thread, a VSync thread, and a buffer thread (such as a queue buffer). The composition thread is configured to be woken up by using a VSync signal, for composition. The VSync thread is configured to generate a next VSync signal based on a VSync signal request. One or more buffer queues exist in the buffer thread, and each buffer queue is separately configured to store buffered data of an application corresponding to the buffer thread, such as image data obtained through drawing and rendering based on a data frame.

Android runtime (Android Runtime) includes a kernel library and a virtual machine. Android Runtime is responsible for scheduling and managing the Android system.

The kernel library includes two parts. One part is a performance function that needs to be called by using the Java language, and the other part is a kernel library of Android.

The system library may include a plurality of functional modules, such as an image rendering library, an image composition library, an input processing library, and a media library.

The image rendering library is configured to render a two-dimensional or three-dimensional image. The image composition library is configured to composite a two-dimensional or three-dimensional image.

In a possible implementation, an application draws and renders an image by using the image rendering library, and then the application sends a drawn and rendered image to the buffer queue of the SF thread. Each time a VSync signal arrives, the SF thread obtains, in sequence, one frame of to-be-composited image from the buffer queue, and then performs image composition by using the image composition library.

The input processing library is a library configured to process the input device, and may implement mouse, keyboard, and uninterrupted sliding input processing, and the like.

The media library supports playback and recording of a plurality of common audio and video formats, a static image file, and the like. The media library may support a plurality of audio and video encoding formats, such as MPEG4, H.264, MP3, AAC, AMR, JPG, and PNG.

In addition, it may be understood that, the kernel layer in the Android system is a layer between hardware and software. The kernel layer includes at least a sensor driver, a display driver, an audio driver, a Bluetooth driver, a GPS driver, and the like.

Introduction to the software structure of the terminal device 100 concludes. It may be understood that the layers in the software structure shown in FIG. 2 and components included in each layer do not constitute a specific limitation on the terminal device 100. In some other embodiments of this application, the terminal device 100 may include more or fewer layers than those shown in the figure, and each layer may include more or fewer components. This is not limited in this application.

For ease of understanding, some concepts related to embodiments of this application are exemplified for reference.
1. Frame: The frame is a single image of a smallest unit in interface display. A frame may be understood as a still image, and a plurality of connected frames may be quickly and continuously displayed to form an illusion of object movement.
2. Frame rate: The frame rate is a quantity of frames of an image that are refreshed in one second, or may be understood as a quantity of times a graphics processing unit in a terminal device refreshes an image per second. A smoother and more realistic animation may be obtained at a higher frame rate. More frames per second indicate a smoother displayed action.
   It should be noted that, drawing, rendering, composition, and other processes may be performed before an interface displays a frame.
3. Frame drawing: The frame drawing is image drawing of a display interface. The display interface may include one or more views. Each view may be drawn by a visual control of a view system. Each view includes sub-views. One sub-view corresponds to one part in the view. For example, one sub-view corresponds to one symbol in an image view.
4. Frame rendering: The frame rendering is, for example, performing a coloring operation on or adding a 3D effect to a drawn view. For example, the 3D effect may be a lighting effect, a shadow effect, or a texture effect.
5. Frame composition: The frame composition is a process of compositing one or more rendered views into a display interface.
6. Vertical synchronization (Vertical synchronization, VSync) signal: The VSync signal is a signal used to control beginning of drawing and rendering, composition, display, or another process of a frame.

It should be noted that, to ensure display smoothness, and avoid a phenomenon such as display freezing, a terminal device usually performs display based on a VSync signal, to synchronize image drawing, rendering, composition, screen refresh display, and other processes.

It may be understood that the VSync signal is a cyclic signal, and a VSync signal cycle may be set based on a screen refresh rate. For example, when the screen refresh rate is 60 Hz, the VSync signal cycle may be 16.6 ms, to be specific, the terminal device generates one control signal every 16.6 ms, so that the VSync signal cycle is triggered. For another example, when the screen refresh rate is 90 Hz, the VSync signal cycle may be 11.1 ms, to be specific, the terminal device generates one control signal every 11.1 ms, so that the VSync signal cycle is triggered.

In addition, it should be further noted that, the VSync signal includes software VSync (VSync-APP or VSync-SF) and hardware VSync (VSync-HW). VSync-APP is used to trigger a drawing and rendering procedure. VSync-SF is used to trigger a composition procedure. A hardware VSync signal (VSync-HW) is used to trigger a screen display refresh procedure. Usually, software VSync and hardware VSync are kept cyclically synchronized. A change between 60 Hz and 120 Hz is used as an example. If VSync-HW is switched from 60 Hz to 120 Hz, VSync-APP and VSync-SF synchronously change from 60 Hz to 120 Hz.

With reference to a scenario in which an application is started or interface switching occurs in the application, the following describes a working procedure of software and hardware of the terminal device 100 by using an example.

For example, when a touch sensor in a touch panel receives a touch operation, the kernel layer processes the touch operation into an original input event (including information such as touch coordinates, touch force, and a timestamp of the touch operation). EventHub monitors the original input event and stores the original input event in the kernel layer. InputReader reads the original input event from the kernel layer through the input processing library, and transfers the original input event to InputDispatcher. InputDispatcher performs packaging processing on the original input event, for example, encapsulates the original input event into a specified data format; and determines an application corresponding to the original input event, and then reports the original input event to the input manager. The input manager parses information (including an operation type, a reporting point position, and the like) about the original input event, determines a focus application, namely, the application corresponding to the original input event, based on a current focus, and sends the parsed information to the focus application.

It may be understood that the focus may be a touch point of a finger in a touch operation or a click position of a stylus or a mouse in a click operation. The focus application is an application running in a foreground of the terminal device or an application corresponding to a touch position in a touch operation. The focus application determines, based on parsed information (for example, the reporting point position) of the original input event, a control corresponding to the original input event.

For example, the touch operation is an uninterrupted sliding operation, and a control corresponding to the uninterrupted sliding operation is a list control of a WeChat application. The WeChat application calls, by using the view system, the image rendering library in the system library to draw and render an image. The WeChat application sends a drawn and rendered image to the buffer queue of the SF thread. The drawn and rendered image is composited into a WeChat interface by using the image composition library in the system library. The SF thread enables, by using the display driver of the kernel layer, the display screen to display a corresponding interface of the WeChat application.

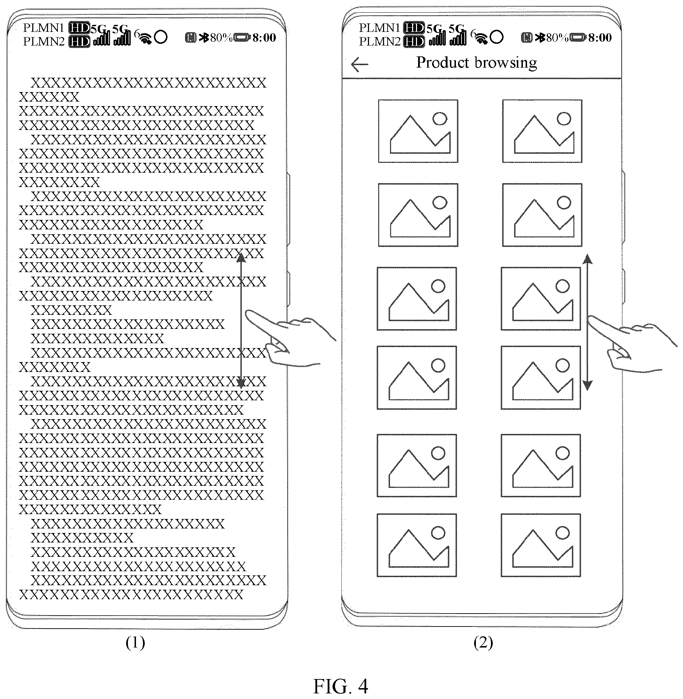

With reference to the accompanying drawings, the following describes an application scenario to which the technical solutions provided in this application are applicable. For example, (1) and (2) in FIG. 3 and (1) and (2) in FIG. 4 are schematic diagrams of interfaces of a terminal device in different applications in possible implementations.

For example, the terminal device may receive an upward sliding operation or a downward sliding operation of a user in an arrow direction in a social application interface shown in (1) in FIG. 3, a setting related interface shown in (2) in FIG. 3, a document interface shown in (1) in FIG. 4, or a product browsing interface shown in (2) in FIG. 4. When the terminal device receives a sliding operation performed by the user, the terminal device performs frame drawing, rendering, and composition, and other processes based on the sliding operation, and finally displays a composite image, so that content displayed on a display screen changes as a finger of the user moves on the display screen, in other words, content of a current interface is updated with movement of the finger.

It may be understood that drawing, rendering, composition, and other processes usually need to be performed before interface display of the display screen of the terminal device. For example, an interface drawing process of the terminal device may include background drawing, sub-view drawing, scroll bar drawing, and other processes. An interface composition process of the terminal device may include vertex processing, pixel processing, and other processing processes.

However, if the terminal device times out (for example, exceeds one VSync cycle) when drawing and rendering an image (a frame), an image frame that needs to be drawn and rendered in another cycle occupied by the terminal device may be lost, and consequently, an abnormal phenomenon such as display freezing or jumping occurs in the terminal device.

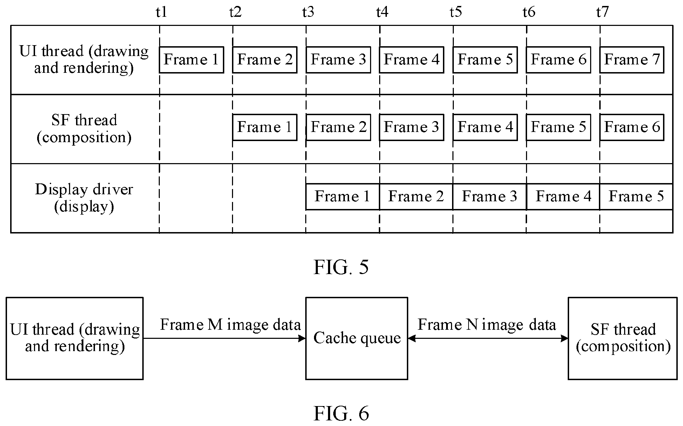

With reference to FIG. 5 to FIG. 11, the following describes a data processing procedure involved in interface display of a terminal device, a routine of a data frame in a data processing process, and a data processing procedure and an interface content change in a case in which a frame loss occurs.

For example, after obtaining an original input event dispatched by InputDispatcher through InputManagerService, a focus application delivers the original input event. A delivery process of the focus application is, for example, as follows: A drawing and rendering thread (such as Choreographer) that is in a UI thread corresponding to the focus application and that is used to perform interface drawing initiates a VSync signal request, and draws a frame after receiving a VSync signal. Based on this premise, referring to FIG. 5, for example, t1 to t7 are time points at which Choreographer in the UI thread receives VSync signals. The VSync signal is sent by an SF thread, and is specifically sent by a VSync thread in the SF thread, to Choreographer in each VSync signal cycle after a VSync signal request is received. Because the VSync signal has a fixed cycle, duration between any two time points in t1 to t7 is fixed, namely, one VSync signal cycle.

Still referring to FIG. 5, for example, after receiving a VSync signal at the time point t1, Choreographer draws and renders a frame 1.

It may be understood that during actual application, for each frame of drawn frame image data, Choreographer in the UI thread sends the current drawn frame image data, for example, frame M image data in FIG. 6, to a buffer thread of the SF thread, and the buffer thread buffers the frame image data in a buffer queue corresponding to the focus application, so that a composition thread in the SF thread extracts the frame image data from the buffer queue at a corresponding composition time point, for composition. N = M - 1, and M is an integer greater than 1.

Based on a flow direction that is of frame image data and that is shown in FIG. 6, still referring to FIG. 5, for example, after drawing and rendering of the frame 1 are completed, Choreographer sends drawn frame 1 image data to the buffer thread of the SF thread, and the buffer thread buffers the frame 1 image data in the buffer queue corresponding to the focus application. Correspondingly, when a corresponding composition time point is reached, the composition thread extracts the frame 1 image data from the buffer queue, for composition. After the composition is completed, the terminal device may call a display driver of a kernel layer, to display, on a display screen, content corresponding to the frame 1.

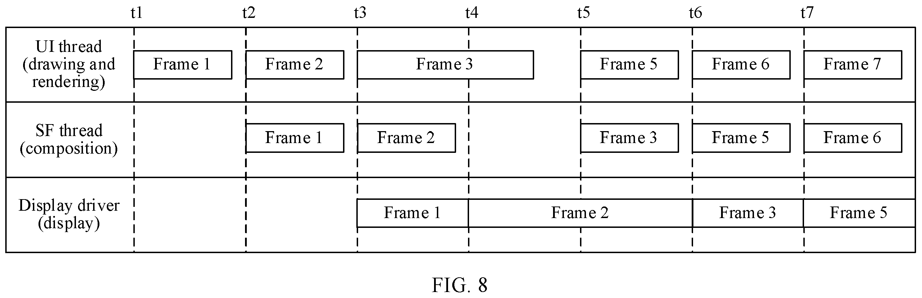

It should be noted that, in FIG. 5, and subsequent FIG. 8, FIG. 10, FIG. 13A and FIG. 13B, FIG. 15, and FIG. 16, frame data, such as a frame 1, a frame 2, and a frame 3, appearing in an SF thread is drawn and rendered image data corresponding to the frame data, and frame data, such as a frame 1, a frame 2, and a frame 3, appearing in the display driver is a composite image corresponding to the frame data.

Still referring to FIG. 5, for example, drawing and rendering, composition, and display of frames 2 to 7 that are respectively received at the time points t2 to t7 are similar to those of the frame 1, and details are not described herein.

In addition, it should be noted that, each frame has specific lag duration from drawing and rendering to composition, and also has specific lag duration from composition to display. The two types of lag duration may be the same, or may be different. Therefore, as shown in FIG. 5, drawing and rendering of the frame 1 begin at the time point t1, and in a drawing and rendering cycle of the frame 1, for example, in time from t1 to t2 in FIG. 5, the SF thread composites frame image data (not shown in FIG. 5) in front of the frame 1, and the display driver drives the display screen to display content obtained before the original input event is triggered.

For example, after the drawing and rendering of the frame 1 are completed, Choreographer sends a request for requesting a next VSync signal to the VSync thread. Even if there is still available duration in the current cycle, a next frame is not drawn and rendered. Instead, only after a next VSync signal is received, for example, at the time point t2 in FIG. 5, drawing and rendering of the frame 2 begin. In this embodiment, for example, if lag time of each frame from drawing and rendering to composition is one VSync information cycle, at the time point t2, when Choreographer begins to draw and render the frame 2, the composition thread extracts the frame 1 image data from the buffer queue, and combines the frame 1 image data.

For example, lag duration from composition to display is still one VSync information cycle. Because the frame 1 image data is composited at the time point t2, the display driver begins, at the moment t3, to drive the display screen to display the content corresponding to the frame 1, and display the content corresponding to the frame 1 in whole duration from t3 to t4, until new composite content is extracted in a next VSync signal cycle, for display.

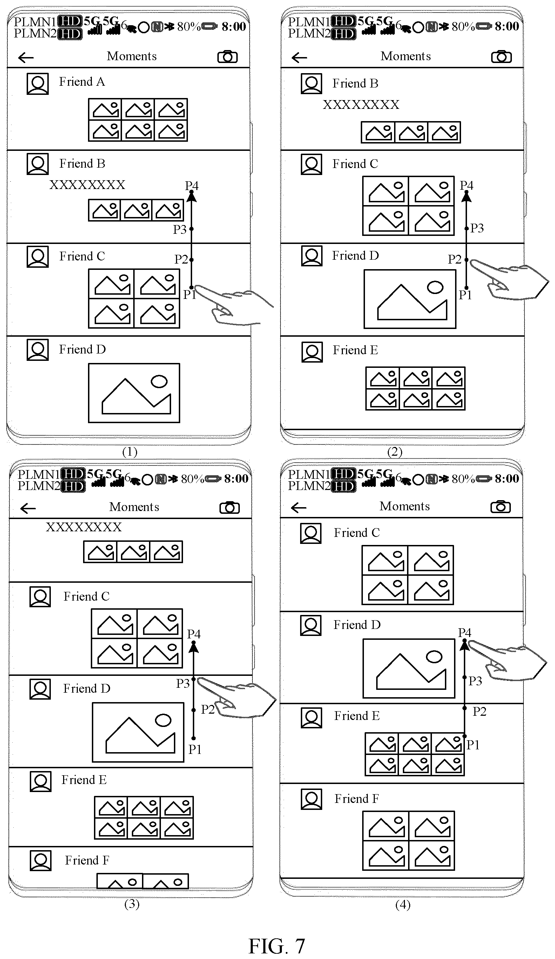

It may be understood that, in FIG. 5, drawing and rendering of each frame are completed in a corresponding cycle. In this case, for content displayed on the display screen, an interface is refreshed based on a fixed cycle with movement of a finger/stylus. For example, the focus application is a social application. As shown in (1) in FIG. 7, in a process in which the user slides from a point P1 to a point P4 in an arrow direction on a current interface without interruption, a touch sensor in a touch panel receives the operation, and the kernel layer processes the operation into an original input event, and EventHub monitors the original input event and stores the original input event in the kernel layer. InputReader reads the original input event from the kernel layer through an input processing library, and transfers the original input event to InputDispatcher. InputDispatcher performs packaging processing on the original input event, for example, encapsulates the original input event into a specified data format; and determines an application corresponding to the original input event, and then reports the original input event to an input manager. The input manager parses information (including an operation type, a reporting point position, and the like) about the original input event, determines a focus application based on a current focus, and sends the parsed information to the focus application. Choreographer in the focus application requests a VSync signal. After receiving a VSync signal, Choreographer begins to draw and render frame data corresponding to a current reporting point, the composition thread performs composition, and the display driver performs display. When the finger slides to P2, after drawing and rendering and composition of frame data of the point P2 are completed, interface content shown in (2) in FIG. 7 is finally displayed.

It may be understood that, from drawing and rendering to composition and then to display for each frame, lag time of each stage is, for example, one VSync signal cycle. Therefore, there are only two VSync signal cycles from drawing and rendering to final display for a first frame, and subsequently, in a data processing process shown in FIG. 5, interface content is automatically switched in each VSync signal cycle. To be specific, when the user slides from the point P1 to the point P2, interface content is immediately switched to the content in (2) in FIG. 7 without perception of the user; when the user slides from the point P2 to a point P3, interface content is immediately switched to content in (3) in FIG. 7 without perception of the user; and when the user slides from the point P3 to the point P4, interface content is immediately switched to the content in (4) in FIG. 7 without perception of the user. In other words, in an entire sliding process, a change in interface content is relatively smooth, without freezing or jumping.

However, this is only in an ideal state, namely, a case in which a drawing and rendering process does not time out and no frame is lost. However, with an increasing requirement of a user for an application, more content is displayed on an interface of the application. Therefore, in a sliding process, for each frame of data, more controls, icons, or the like need to be drawn and rendered, and consequently, drawing and rendering of one frame of data cannot be completed in one cycle.

As shown in FIG. 8, at a time point t3, Choreographer begins to draw and render a frame 3. For example, in a possible case, if Choreographer does not complete drawing of the frame 3 in a cycle from t3 to t4, in other words, drawing and rendering of the frame 3 time out, at the time point t4, when a new VSync signal is received, because the drawing and rendering of the frame 3 are not completed yet, a frame 4 is not drawn and rendered. In addition, because the drawing and rendering of the frame 3 that begin at the time point t3 are not completed yet, there is no frame 3 image data in the buffer queue at the time point t4, and therefore the composition thread cannot obtain the frame 3 image data from the buffer queue at the time point t4.

Still referring to FIG. 8, for example, in an interval from t4 to t5, Choreographer completes the drawing and rendering of the frame 3. Because a new VSync signal, namely, a VSync signal corresponding to the time point t5, is not received, Choreographer enters a short blank cycle. After receiving the VSync signal at the time point t5, Choreographer begins to draw and render a frame 5. In addition, because the drawing and rendering of the frame 3 are completed before the time point t5, the frame 3 image data is buffered in the buffer queue. Therefore, at the time point t5, the composition thread can extract the frame 3 image data from the buffer queue, for combination, so that the display driver can display, after lag time of one VSync signal cycle, namely, at a time point t6 in FIG. 8, content that corresponds to the frame 3 and that is obtained by the composition thread through composition.

Still referring to FIG. 8, for example, after display of content corresponding to a frame 2 begins at the time point t4, the display driver does not obtain a new frame obtained by the composition thread through composition, until the time point t6, where the new frame is specifically the content corresponding to the frame 3. Therefore, the content corresponding to the frame 2 is continuously displayed from the time point t2 to the time point t6.

It may be understood that drawing and rendering, composition, and display logic of each frame in FIG. 8 is similar to that shown in FIG. 5. For a part not described in detail in this embodiment, refer to the part of the embodiment shown in FIG. 5. Details are not described herein again.

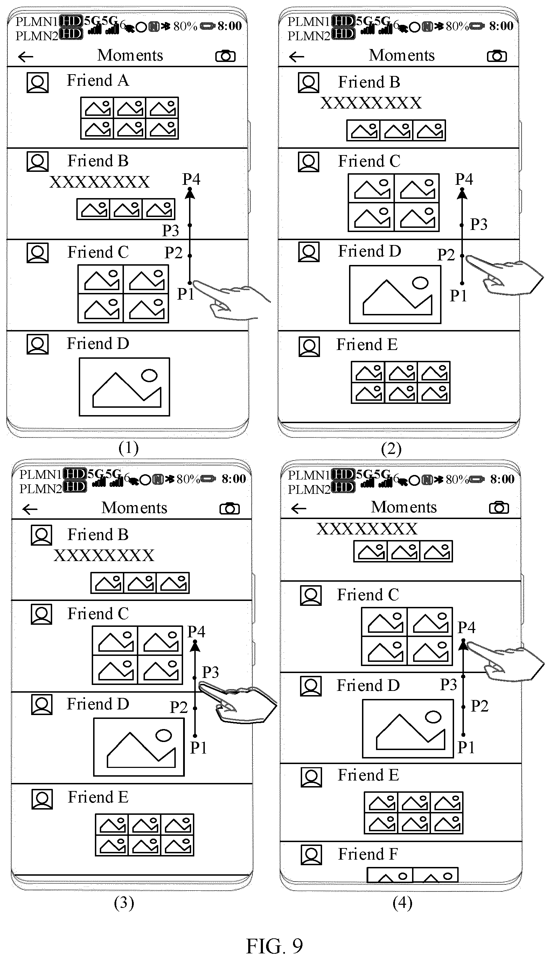

For a data processing procedure shown in FIG. 8, specifically, during actual application, an example in which uninterrupted sliding occurs in an interface of a social application and interface content changes is still used. As shown in (1) in FIG. 9, the user still slides from a point P1 to a point P4 in an arrow direction without interruption. Drawing and rendering of frames respectively corresponding to the point P1 and a point P2 do not time out. Therefore, corresponding interface content is normally displayed when the finger is at the point P1, as shown in (1) in FIG. 9, and corresponding interface content is also normally displayed when the finger is at the point P2, as shown in (2) in FIG. 9. However, when the user slides from the point P2 to a point P3, drawing and rendering of a frame corresponding to the point P3 time out, and consequently, corresponding interface content does not change when the finger is at the point P3, as shown in (3) in FIG. 9, and is still the content corresponding to the point P2. Then, in a process in which the finger slides from the point P3 to the point P4, the drawing and rendering of the frame corresponding to the point P3 are completed. When the finger slides to the point P4, an interface is updated to content of the frame corresponding to the point P3, namely, interface content shown in (4) in FIG. 9, the same as the interface content that is of the point P3 and that is shown in (3) in FIG. 7 when drawing and rendering are normal without timeout. When one frame is lost, an interface does not change in at least two VSync signal cycles. If more frames are lost, duration is longer, and consequently, the user perceives freezing, affecting user experience.

Still referring to FIG. 8, for example, because the frame 4 is lost, at a time point t7, an image displayed on the display screen directly jumps from the content of the frame 3 to content of a frame 5. When only one frame is lost, interface jumping may not be obvious, and the user does not perceive the interface jumping. However, if frames are continuously lost, interface jumping is obvious, and the user perceives the interface jumping, affecting user experience.

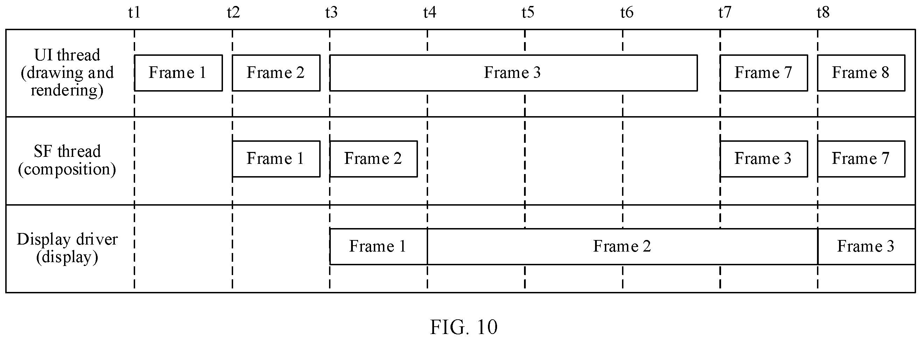

As shown in FIG. 10, at a time point t3, Choreographer begins to draw and render a frame 3. Choreographer does not complete drawing of the frame 3 in a cycle from t3 to t4. At the time point t4, when a new VSync signal is received, because drawing and rendering of the frame 3 are not completed yet, a frame 4 is not drawn and rendered. In addition, because the drawing and rendering of the frame 3 that begin at the time point t3 are not completed yet, there is no frame 3 image data in the buffer queue at the time point t4, and therefore the composition thread cannot obtain the frame 3 image data from the buffer queue at the time point t4.

Still referring to FIG. 10, for example, Choreographer does not complete the drawing of the frame 3 in a cycle from t4 to t5. At the time point t5, when a new VSync signal is received, because the drawing and rendering of the frame 3 are not completed yet, a frame 5 is not drawn and rendered. In addition, because the drawing and rendering of the frame 3 that begin at the time point t3 are not completed yet, there is no frame 3 image data in the buffer queue at the time point t5, and therefore the composition thread cannot obtain the frame 3 image data from the buffer queue at a time point t6.

Still referring to FIG. 10, for example, Choreographer does not complete the drawing of the frame 3 in a cycle from t5 to t6. At the time point t6, when a new VSync signal is received, because the drawing and rendering of the frame 3 are not completed yet, a frame 6 is not drawn and rendered. In addition, because the drawing and rendering of the frame 3 that begin at the time point t3 are not completed yet, there is no frame 3 image data in the buffer queue at the time point t6, and therefore the composition thread cannot obtain the frame 3 image data from the buffer queue at a time point t7.

Still referring to FIG. 10, for example, in an interval from t6 to t7, Choreographer completes the drawing and rendering of the frame 3. Because a new VSync signal, namely, a VSync signal corresponding to the time point t7, is not received, Choreographer enters a short blank cycle. After receiving the VSync signal at the time point t7, Choreographer begins to draw and render a frame 7. In addition, because the drawing and rendering of the frame 3 are completed before the time point t7, the frame 3 image data is buffered in the buffer queue. Therefore, at the time point t7, the composition thread can extract the frame 3 image data from the buffer queue, for combination, so that the display driver can display, after lag time of one VSync signal cycle, namely, at a time point t8 in FIG. 10, content that corresponds to the frame 3 and that is obtained by the composition thread through composition.

Still referring to FIG. 10, for example, after display of content corresponding to a frame 2 begins at the time point t4, the display driver does not obtain a new frame obtained by the composition thread through composition, until the time point t8, where the new frame is specifically the content corresponding to the frame 3. Therefore, the content corresponding to the frame 2 is continuously displayed from the time point t2 to the time point t8. If more frames are lost in a drawing and rendering stage, in an uninterrupted sliding operation, the display screen displays a same image for longer time. In addition, because a plurality of frames, for example, the frame 4, the frame 5, and the frame 6, are lost, after display of the content corresponding to the frame 3 is completed, in a next display cycle, the display driver directly drives the display screen to display content of the frame 7. The lost middle frames cause image jumping, affecting user experience.

It may be understood that drawing and rendering, composition, and display logic of each frame in FIG. 10 is similar to that shown in FIG. 5. For a part not described in detail in this embodiment, refer to the part of the embodiment shown in FIG. 5. Details are not described herein again.

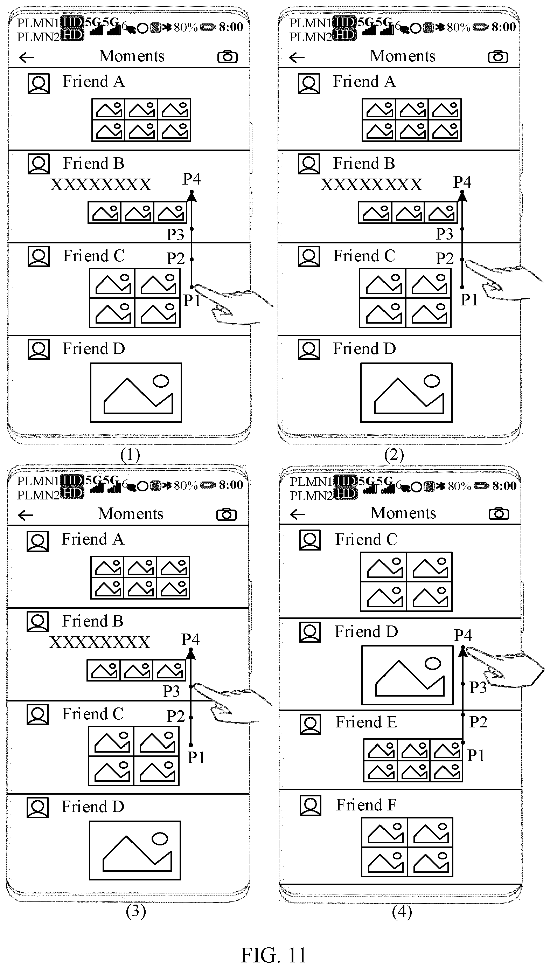

For a data processing procedure shown in FIG. 10, specifically, during actual application, an example in which uninterrupted sliding occurs in an interface of a social application and interface content changes is still used. As shown in (1) in FIG. 11, the user still slides from a point P1 to a point P4 in an arrow direction without interruption. Drawing and rendering of a frame corresponding to the point P1 do not time out. Therefore, corresponding interface content is normally displayed when the finger is at the point P1, as shown in (1) in FIG. 11. If there is still another displacement point between the point P1 and a point P2, and drawing and rendering of a frame corresponding to the point time out, assuming that the drawing and rendering of the frame corresponding to the point are not completed until the point P4, when the finger moves from the point to the point P2, and moves from the point P2 to a point P3, interface content does not change as shown in (2) and (3) in FIG. 11, and is the same as content that is of the frame corresponding to the point P1 and that is obtained after drawing and rendering, composition, and display, in other words, there is same interface content in (1), (2), and (3) in FIG. 11. After the finger moves to the point P4, because frames corresponding to the point P2 and the point P3 are lost, after drawing and rendering and combination of a frame corresponding to the point P4 are completed, in a next cycle, an image displayed on the display screen directly jumps from (3) in FIG. 11, namely, the content of the frame corresponding to the point P1, to (4) in FIG. 11, namely, content of the frame corresponding to the point P4. Consequently, the user perceives the jumping, affecting user experience.

It should be understood that the foregoing descriptions are merely examples listed for a better understanding of the technical solutions of this embodiment, and are not considered as a unique limitation on this embodiment.

In conclusion, in an application, when a user moves on a display screen by using a finger or a stylus (subsequently, a finger is used as an example for description), as interface content increases, for each frame of data, more controls, icons, or the like need to be drawn and rendered, and timeout and a frame loss may occur in a drawing and rendering process. Consequently, a freezing or jumping phenomenon occurs in an image displayed on the display screen.

In view of this, this application provides a data processing method, to resolve the foregoing freezing or jumping phenomenon caused by drawing and rendering timeout and a frame loss.

The data processing method provided in this application is described in detail below by using specific embodiments. The following embodiments may be combined with each other or independently implemented, and same or similar concepts or processes may not be described in detail in some embodiments.

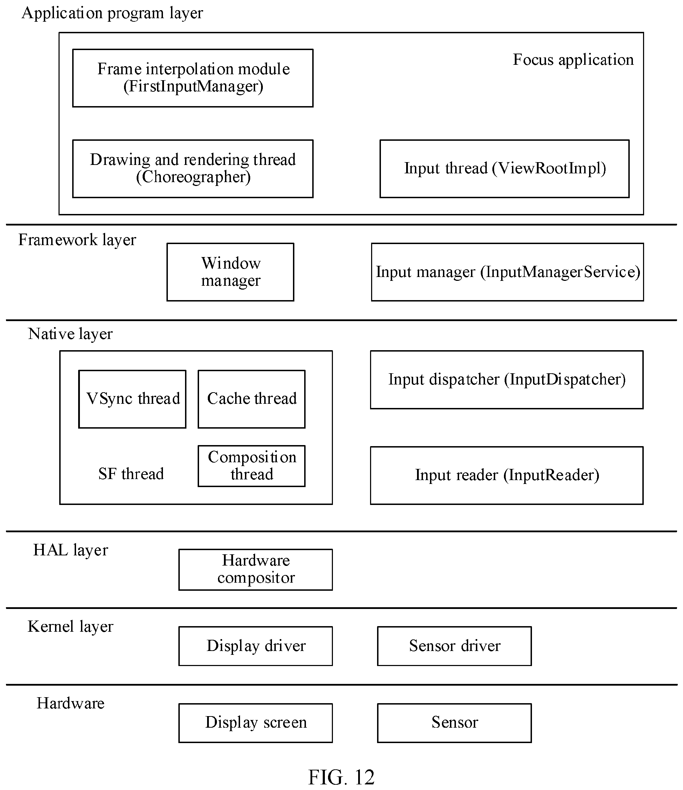

FIG. 12 is a schematic diagram of functional modules involved in a data processing method and positions of the functional modules according to an embodiment of this application.

As shown in FIG. 12, in a process of an uninterrupted sliding operation performed in any application, according to the data processing method provided in this embodiment of this application, the involved functional modules may include: an application located at an application program layer, where the application is referred to as a focus application in this embodiment; a window manager and an input manager that are located at a Framework layer; an SF thread, an input reader, and an input dispatcher that are located at a native layer; a hardware compositor located at a hardware abstraction layer (HAL layer); a display driver and a sensor driver that are located at a kernel layer; and hardware such as a display screen and a sensor.

In addition, it may be learned from the foregoing descriptions of the software architecture of the terminal device described in FIG. 2 that, implementation of the data processing method further relates to an image rendering library, an image composition library, and an input processing library in a system library.

Still referring to FIG. 12, for example, for each focus application, drawing and rendering of frame data specifically relate to an input thread (ViewRootImplement, which may be represented as ViewRootImpl), a drawing and rendering thread (Choreographer), and a frame interpolation module (FirstInputManager) that are implemented/called in a UI thread of the application.

Still referring to FIG. 12, for example, the SF thread includes a VSync thread, a buffer thread, and a composition thread.

For example, when an uninterrupted sliding operation is performed, the VSync thread sends a VSync signal to Choreographer once in each VSync signal cycle, so that after receiving the VSync signal, Choreographer begins to draw and render a frame.

Specifically, for drawing and rendering of each frame, Choreographer first needs to read an original input event (hereinafter referred to as Input event) from ViewRootImpl based on a timestamp corresponding to a VSync signal (each reporting point corresponds to one timestamp in a process of an uninterrupted sliding operation), and process the original input event. Specifically, for example, the Input event is obtained in the following manner: ViewRootImpl sends a reporting point information obtaining request (carrying the timestamp corresponding to the VSync signal) to InputManagerService; then, InputManagerService transmits the reporting point information obtaining request to InputDispatcher, and InputDispatcher transmits the reporting point information obtaining request to InputReader; and finally, InputReader obtains, from the kernel layer based on the timestamp carried in the reporting point information obtaining request, reporting point information that is obtained and stored in the kernel layer when the Input event corresponding to the timestamp occurs.

Correspondingly, after the corresponding reporting point information is obtained, the reporting point information is upward transferred to InputDispatcher level by level. InputDispatcher calls callBack callback registered by the focus application with InputDispatcher, to return the reporting point information to ViewRootImpl of the focus application through InputManagerService. Then, ViewRootImpl transmits the reporting point information to Choreographer. In this way, obtaining of one frame of data can be completed.

In addition, it should be noted that, in this embodiment, to resolve a problem of freezing or jumping of an image on a display screen due to timeout or a frame loss that occurs in a drawing and rendering process of frame data, when obtaining frame data, before beginning drawing and rendering, Choreographer transfers a currently read Input event to FirstInputManager.

It may be understood that, an Input event of an uninterrupted sliding operation usually includes a DOWN event (a finger falls), a MOVE event (the finger moves), and an UP event (the finger lifts).

For example, after Choreographer transfers a currently read Input event to FirstInputManager, FirstInputManager detects a sequence number of a change between continuously entered Input events. When FirstInputManager detects a sequence number of a change from a DOWN event to a MOVE event, and when content displayed on a display screen begins to move for the first time, FirstInputManager may generate a new event Event, and notify Choreographer of the new Event, so that after drawing and rendering currently received frame data, Choreographer continues to draw and render a frame in a same cycle, in other words, after drawing and rendering are completed for the first frame, a frame is interpolated in a cycle in which the first frame is located.

In addition, when detecting a frame loss, FirstInputManager further calculates a quantity of frames for which supplementation needs to be performed, determines specific frames for which supplementation needs to be performed, and enters a procedure of re-triggering frame obtaining, to obtain lost frames, for frame supplementation.

Still referring to FIG. 12, for example, after completing drawing and rendering of each frame, Choreographer transmits drawn and rendered frame image data to the buffer thread, and then the buffer thread buffers the drawn and rendered frame image data in a corresponding buffer queue. When a processing cycle of the composition thread is reached, the composition thread extracts the frame image data from the buffer queue, for composition, and finally transmits composite content to the hardware compositor. The hardware compositor calls the display driver to drive the display screen, for display, thereby implementing updating of an image displayed on the display screen.

A specific interaction procedure of the functional modules shown in FIG. 12 in a data processing process is described below with reference to the accompanying drawings.

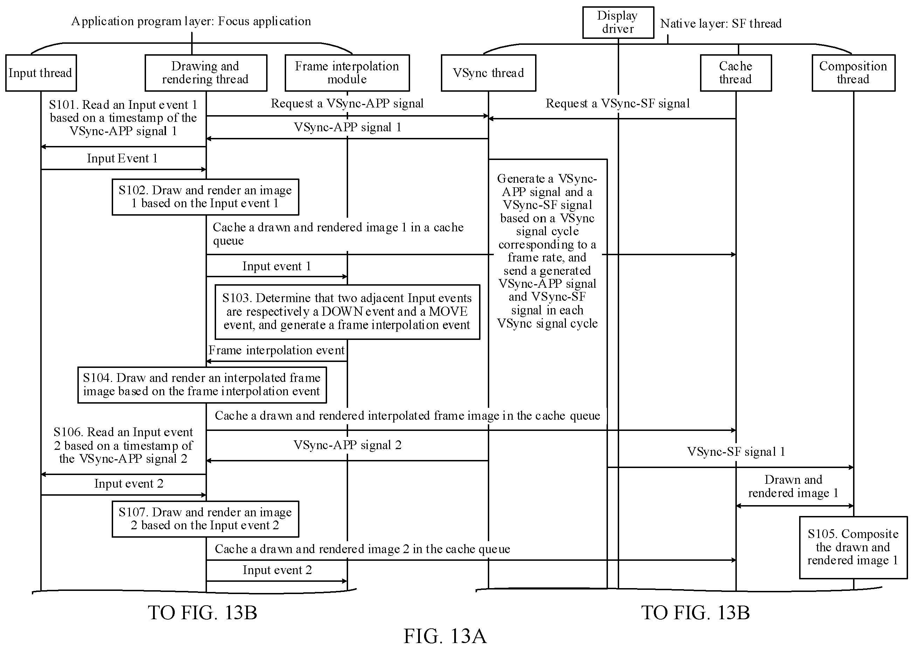

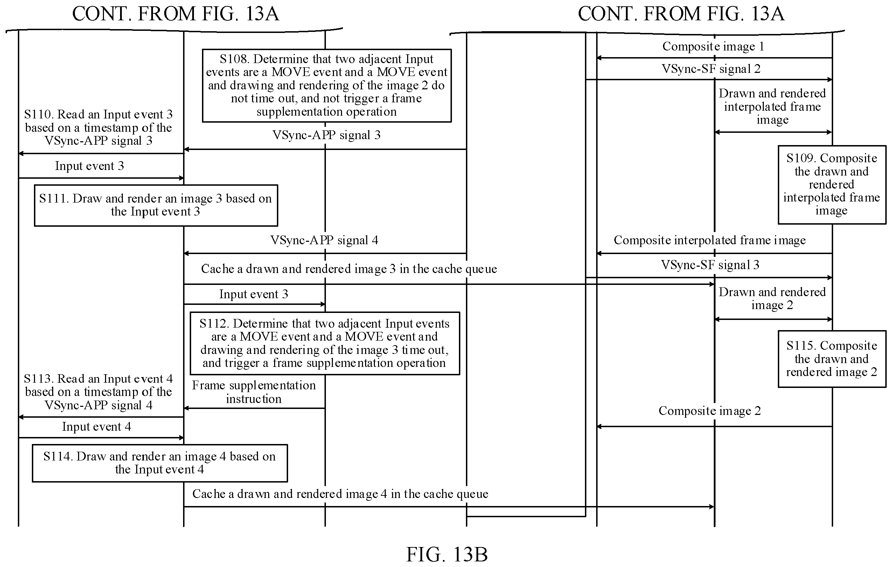

FIG. 13A and FIG. 13B are a sequence diagram of interaction between functional modules involved in an implementation process of a data processing method according to an embodiment of this application.

Referring to FIG. 13A and FIG. 13B, for example, some functional modules, for example, the display screen, the sensor, the input reader, the input dispatcher, the input manager, the window manager, and the hardware compositor in FIG. 12, are omitted. In FIG. 13A and FIG. 13B, interaction between an input thread, a drawing and rendering thread, a frame interpolation module, a buffer thread, a composition thread, and a display driver in a process of an uninterrupted sliding operation is specifically described by directly using the following example: When a user performs uninterrupted sliding (an Input event) in a focus application, a sensor monitors the sliding operation; an input reader obtains the Input event, obtains reporting point information corresponding to the Input event, and reports the Input event to an input dispatcher; the input dispatcher obtains, from a window manager, the focus application corresponding to the Input event, and then dispatches, based on a package name and other information that correspond to the focus application, the Input event to an input thread of the focus application through an input manager by using CallBack callback registered by the focus application with the input dispatcher, for recording and management; and the focus application initiates, to a VSync thread in response to the uninterrupted sliding operation of the user, a request for requesting a VSync-APP signal.

In addition, before description is performed with reference to FIG. 13A and FIG. 13B, a VSync-APP signal and a VSync-SF signal that are involved in FIG. 13A and FIG. 13B are first described. Specifically, in this embodiment, a time point at which the VSync-APP signal is received is a time point at which the drawing and rendering thread is triggered to begin drawing and rendering, for example, each time point in t1 to t7 in FIG. 5, and a time point at which the VSync-SF signal is received is a time point at which the composition thread is triggered to begin composition. In this embodiment, any VSync-SF signal that lags behind a VSync-APP signal by one VSync signal cycle is used as an example, and a composition processing time point of a drawn and rendered image corresponding to a frame 1 may be a time point t2 in FIG. 5.

In addition, it should be further noted that, a request for requesting the VSync-APP signal is initiated by a thread corresponding to the focus application, for example, an application main thread (a UI thread), to the VSync thread (an UI application is not shown in FIG. 13A and FIG. 13B, and an example in which the request is initiated by the drawing and rendering thread in the UI thread is directly used), and a request for requesting the VSync-SF signal may be, for example, initiated by the buffer thread to the VSync thread.

In addition, it should be further noted that, sending cycles corresponding to the VSync-APP signal and the VSync-SF signal are fixed and are related to a frame rate, and lag time between the VSync-APP signal and the VSync-SF signal is also fixed, for example, the foregoing one VSync signal cycle. Therefore, the VSync thread periodically generates a VSync-APP signal and a VSync-SF signal based on a VSync signal cycle corresponding to a current frame rate; and in each VSync signal cycle, sends the generated VSync-APP signal to the drawing and rendering thread, and sends the generated VSync-SF signal to the composition thread.

S101. When receiving a VSync-APP signal 1, the drawing and rendering thread reads a recorded Input event 1 from the input thread based on a timestamp of the VSync-APP signal 1.

It may be learned from the foregoing descriptions that, an Input event corresponding to a sliding operation may include a DOWN event, a MOVE event, and an UP event. For example, in a DOWN event, the drawing and rendering thread sends a request for requesting a VSync-SF signal to the VSync thread, and a response is made. In this case, when the VSync-APP signal 1 is received, if a finger moves, the read Input event 1 may be a MOVE event; or if the finger lifts, the read Input event 1 may be an UP event. In this embodiment, for example, the Input event 1 is a MOVE event.

In addition, it may be understood that, in an uninterrupted sliding process, the input dispatcher continuously dispatches received Input events to the input thread through the input manager. Corresponding reporting frequency depends on a sampling rate of a display screen. For example, if the sampling rate is 120 Hz, the display driver dispatches data to the input thread every 8 ms or so, and the data is stored in an event queue for waiting consumption. The drawing and rendering thread consumes an Input event in the event queue based on a VSync signal timestamp.

S102. After receiving the Input event 1 (MOVE event), the drawing and rendering thread begins to process the Input event 1 (MOVE event).

Specifically, the drawing and rendering thread obtains, through the input thread, the input manager, the input dispatcher, and the input reader in the foregoing manner of obtaining reporting point information, frame data that needs to be drawn and rendered, for example, the foregoing frame 1; and then draws and renders the frame 1, and buffers a drawn and rendered image 1 in a buffer queue allocated by the buffer thread to the focus application.

It may be understood that, during actual application, the drawing and rendering thread needs to first initiate, to the buffer thread, a request for allocating a buffer queue, and the buffer thread allocates, in response to the request, the corresponding buffer queue to the focus application, and notifies the drawing and rendering thread of address information of the allocated buffer queue. In this way, after completing drawing and rendering of each frame, the drawing and rendering thread can buffer a drawn and rendered image in the buffer queue based on the address information.

Still referring to FIG. 13A and FIG. 13B, for example, in this embodiment, in a process of drawing and rendering the image 1 based on the Input event 1, the drawing and rendering thread further sends the Input event 1 to the frame interpolation module, and the frame interpolation module determines whether to perform a frame interpolation operation or a frame supplementation operation.

S103. The frame interpolation module detects types of two adjacent Input events (in this embodiment, for example, the Input event 1 is a MOVE event type, and an Input event 0 that is adjacent to the Input event 1 and that is received last time is a DOWN event type), determines that the two adjacent Input events are respectively a DOWN event and a MOVE event, and generates a frame interpolation event.

Specifically, when the two adjacent Input events are a DOWN event and a MOVE event, it indicates that drawing and rendering of the first frame currently occur, in other words, the drawing and rendering operation performed after the VSync-APP signal 1 is received is performed on the first frame of data. To avoid a subsequent case in which an image displayed on the display screen freezes due to a loss of one frame, in the data processing method provided in this embodiment, a new event, namely, the frame interpolation event, is generated by using the frame interpolation module, and the drawing and rendering thread is notified to process the frame interpolation event, to be specific, perform a drawing and rendering operation again in a current processing cycle.

It may be understood that, in this case, because a cycle of sending a new VSync-APP signal, for example, a VSync-APP signal 2, does not arrive, the drawing and rendering thread does not receive the VSync-APP signal 2, and does not obtain, from the input thread, an Input event 2 corresponding to the VSync-APP signal 2, namely, frame data for drawing and rendering. To ensure the current time of drawing and rendering operation, when generating the frame interpolation event, for example, the frame interpolation module may add a corresponding offset to a position of a previous Input event, to generate a new Input event. The new Input event is the foregoing frame interpolation event. In this way, the drawing and rendering thread can perform drawing and rendering again based on the new Input event (frame interpolation event).

In addition, it should be noted that, to accelerate a data processing process and reduce unnecessary frame interpolation processing, in a process of drawing and rendering each frame, it may be determined, according to the following determining logic, whether the frame interpolation module needs to generate a frame interpolation event or the following frame supplementation operation.

For example, in some implementations, a packet name of each application may be first obtained when the application is cold started, and then an application type of the application may be determined based on the packet name. Finally, it is determined whether the application type of the application matches a specified application type that supports first-frame interpolation or supports frame supplementation after a frame loss, for example, whether the application type of the application is in a specified whitelist. When it is determined that the application type of the application matches an application type in the specified whitelist, only when receiving the Input event corresponding to the focus application and performing drawing and rendering, the drawing and rendering thread sends the currently processed Input event to the frame interpolation module, so that the frame interpolation module performs operations in steps S103, S108, S112, and the like.

It may be understood that the foregoing cold start means that when the application is started, a background has no process of the application. In this case, a system creates a new process and allocates the new process to the application. This start manner is referred to as cold start (no process of the application exists in the background). During cold start, the system creates a new process and allocates the new process to the application. Therefore, an application program type (Application type) is first created and initialized; then, a MainActivity type (including a series of measurements, layouts, and drawing) that corresponds to the application and that provides an interface for interacting with the user is created and initialized; and finally, an interface of the application, for example, the first interface displayed by default after the application is started, is displayed on the display screen.

In addition, the foregoing operation of obtaining a packet name of each application when the application is cold started is, for example, performed by a security protection program (which may be referred to as IAware APK) that is in a terminal device and that particularly performs packet name obtaining.

In addition, the foregoing application type specified in the whitelist may be, for example, News, Instant messaging, Shopping, Browser, Videos, Short videos, or Forums. Examples are not listed one by one herein. This is not limited in this embodiment.

In addition, a manner of determining the application type of the application based on the package name may be determined based on application type division performed based on package names of different applications in an application market that is installed in the terminal device and that provides downloadable applications.

Therefore, when it is determined, in the foregoing manner, that an application type of each application matches the application type in the specified white list, an enable identifier corresponding to the frame interpolation module may be set to "True". In this way, during drawing and rendering of each frame, when recognizing that the enable identifier corresponding to the frame interpolation module is "True", the drawing and rendering thread can transmit related information of a currently processed Input event to the frame interpolation module, to trigger the frame interpolation module to perform determining processing. On the contrary, if it is recognized that the enable identifier corresponding to the frame interpolation module is "False", the frame interpolation module does not participate in the entire process of the sliding operation, to be specific, performs neither a first-frame interpolation operation nor frame supplementation after a frame loss.

It should be understood that the foregoing descriptions are merely examples listed for a better understanding of the technical solutions of this embodiment, and are not considered as a unique limitation on this embodiment.

In addition, in some other implementations, when recognizing that the enable identifier corresponding to the frame interpolation module is "True", the drawing and rendering thread may further determine, based on reporting point information corresponding to the currently processed Input event, a control that is on an interface displayed on the display screen and to which the Input event is directed. Correspondingly, when the control to which the current Input event is directed is a RecyclerView control or a ListView control, only when performing drawing and rendering based on the Input event, the drawing and rendering thread sends the currently processed Input event to the frame interpolation module, so that the frame interpolation module performs operations in steps S 103, S108, S112, and the like.

It may be understood that, the RecyclerView control and the ListView control usually involve drawing and rendering of a large amount of content. Therefore, through the foregoing determining, it may be further determined whether the frame interpolation module needs to perform corresponding processing during drawing and rendering of each frame, to avoid a case in which the frame interpolation module participates in a scenario in which no drawing timeout or frame loss usually occurs, thereby reducing occupation of resources of the terminal device and also improving a data processing speed.

It should be understood that the foregoing descriptions are merely examples listed for a better understanding of the technical solutions of this embodiment, and are not considered as a unique limitation on this embodiment.

In addition, in some other implementations, when the current Input event is directed to the RecyclerView control or the ListView control, the drawing and rendering thread may determine, in a process of drawing and rendering each frame, a quantity of layers that need to be drawn and rendered. Only when the quantity of layers is 1, in other words, in a drawing and rendering scenario of a single layer, the drawing and rendering thread sends the related information of the currently processed Input event to the frame interpolation module, for processing. For a multi-layer scenario, to avoid addition of another processing difficulty caused by a delay of each subsequent frame due to participation of the frame interpolation module, during multi-layer drawing and rendering, the related information of the current Input event is not sent to the frame interpolation module.

For example, the foregoing multi-layer scenario is, for example, a case in which another control covers the RecyclerView control or the ListView control. Specifically, during actual application, the foregoing multi-layer scenario is, for example, a case in which live broadcast content is further displayed in a small window on a details interface when a shopping software is used to view product details.

It should be understood that the foregoing descriptions are merely examples listed for a better understanding of the technical solutions of this embodiment, and are not considered as a unique limitation on this embodiment.

In addition, in some other implementations, when an interface on which the drawing and rendering thread currently performs drawing and rendering displays a single layer, it may be further determined whether a sliding distance corresponding to the two adjacent Input events is greater than a minimum sliding distance threshold TouchSlop corresponding to the sliding operation.

Correspondingly, only when the sliding distance corresponding to the two adjacent Input events is greater than the minimum sliding distance threshold, when performing drawing and rendering based on the Input, the drawing and rendering thread sends the currently processed Input event to the frame interpolation module, so that the frame interpolation module performs operations in steps S103, S108, S112, and the like.

It should be understood that the foregoing descriptions are merely examples listed for a better understanding of the technical solutions of this embodiment, and are not considered as a unique limitation on this embodiment.

S104. The drawing and rendering thread draws and renders an interpolated frame image based on the interpolation frame event, and buffers a drawn and rendered interpolated frame image in the buffer queue corresponding to the focus application.

It may be understood that, a drawing and rendering operation performed on frame data extracted from the frame interpolation event is similar to a drawing and rendering operation performed on frame data in a normally received Input event. For specific implementation details, refer to the foregoing descriptions. Details are not described herein.

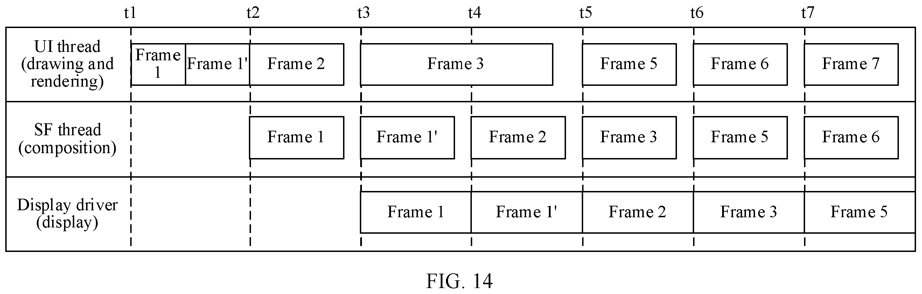

For example, the frame data in the Input event 1 is a frame 1 in FIG. 14. In this case, the VSync-APP signal 1 is received at a moment t1, and in time from t1 to t2, in other words, before receiving the VSync-APP signal 2, the drawing and rendering thread performs a drawing and rendering operation on the frame 1. In addition, after drawing and rendering the frame 1, the drawing and rendering thread further draws and renders a frame 1' in the frame interpolation event in this cycle. To be specific, in the cycle from t1 to t2, two drawn and rendered images are obtained and are respectively an image corresponding to the frame 1 and an image corresponding to the frame 1'.

Still referring to FIG. 13A and FIG. 13B, for example, after the interpolated frame image obtained after the interpolated frame is drawn and rendered is buffered in the buffer queue, if the current cycle does not ends yet, the drawing and rendering thread enters a short blank cycle; or if the current cycle ends, in other words, the VSync-APP signal 2 is received, the drawing and rendering thread performs step S106.

Still referring to FIG. 13A and FIG. 13B, for example, if a time point at which the composition thread begins composition lags behind a drawing and rendering time point of the Input event 1 by one VSync signal cycle, when sending the VSync-APP signal 2 to the drawing and rendering thread, the VSync thread also sends a VSync-SF signal 1 to the composition thread.

Correspondingly, after receiving the VSync-SF signal 1, the composition thread extracts a frame of drawn and rendered image from the buffer queue, and performs step S105.

For example, after receiving a VSync-SF signal, the composition thread extracts, from the buffer queue, a frame of drawn and rendered image previously placed in the buffer queue, for combination. If the queue has no frame of drawn and rendered image, the composition thread does not perform processing.

S105. After receiving the VSync-SF signal 1, the composition thread extracts, from the buffer queue, the drawn and rendered image 1 that corresponds to the Input event 1 and that is previously placed in the buffer queue, and performs composition processing on the drawn and rendered image 1.

Still referring to FIG. 13A and FIG. 13B, for example, after obtaining a composite image 1, the composition thread sends the composite image 1 to the display driver, and then the display driver performs display, to be specific, drives the display screen to display content of the image 1, to implement image updating.

It may be understood that, it may be learned from the foregoing descriptions that the composition thread specifically sends the composite image 1 to the display driver through the hardware compositor that is located at the HAL layer and that is shown in FIG. 12, and then the hardware compositor transmits the composite image 1 to the display driver.

As shown in FIG. 14, the VSync-SF signal 1 is received at the moment t2, and in time from t2 to t3, in other words, before receiving a VSync-SF signal 2, the drawing and rendering thread performs combination processing on the image corresponding to the frame 1. In this way, after the composite image corresponding to the frame 1 is obtained, after specific lag time, when an interval from composition to display is also one VSync signal cycle as described above, at the time point t3, the display driver receives the image that corresponds to the frame 1 and that is obtained by the composition thread through composition, and can drive the display screen to display the image corresponding to the frame 1.

S106. When receiving the VSync-APP signal 2, the drawing and rendering thread reads the recorded Input event 2 (for example, the Input event is a MOVE event) from the input thread based on a timestamp of the VSync-APP signal 2.

S107. After receiving the Input event 2 (MOVE event), the drawing and rendering thread begins to process the Input event 2 (MOVE event), to be specific, draws and renders an image 2 based on the Input event 2.

Drawing and rendering of the Input event 2 are similar to those of the Input event 1. For details, refer to the foregoing descriptions. Details are not described herein.

Still referring to FIG. 13A and FIG. 13B, for example, after completing drawing and rendering of the frame data in the Input event 2, the drawing and rendering thread further buffers an image 2 in the buffer queue. In addition, in a process of drawing and rendering the image 2 based on the Input event 2, the drawing and rendering thread further sends the Input event 2 to the frame interpolation module, and the frame interpolation module determines whether to perform a frame supplementation operation.

It should be noted that, the frame interpolation operation/frame interpolation event in this embodiment is specifically a frame interpolation operation performed for the first frame. A frame interpolated in the operation is a part of content of the first frame, and the drawing and rendering thread does not need to read a new Input event from the input thread. The frame supplementation operation/frame supplementation event is specifically an operation performed when a frame loss is caused by timeout of drawing and rendering of a frame in a process in which the finger moves. A frame interpolated in the operation is a lost frame, and the drawing and rendering thread needs to read an Input event from the input thread. During actual application, both the two operations may be referred to as frame interpolation operations. Names of the operations are not limited in this embodiment.

S108. The frame interpolation module detects types of two adjacent Input events (the Input event 1 and the Input event 2), determines that the two adjacent Input events are a MOVE event and a MOVE event and drawing and rendering of the image 2 do not time out, and does not trigger a frame supplementation operation.

In this case, namely, normal drawing and rendering, no drawing and rendering timeout or frame loss exists. After the drawing and rendering thread completes drawing and rendering of the Input event 2, if a current cycle does not end yet, the drawing and rendering thread enters a short blank cycle; or if the current cycle ends, in other words, a VSync-APP signal 3 is received, the drawing and rendering thread performs step S110.

Still referring to FIG. 13A and FIG. 13B, for example, in a process in which the drawing and rendering thread performs drawing and rendering, in each VSync signal cycle, the VSync thread continues to send a corresponding VSync-SF signal to the composition thread. Correspondingly, after receiving a new VSync-SF signal, the composition thread also extracts, from the buffer queue, a drawn and rendered image located at the head of the queue, for composition processing, and sends a composite image to the display driver, and the display driver performs display. For example, when receiving the VSync-SF signal 2, the composition thread performs step S109; and when receiving a VSync-SF signal 3, the composition thread performs step S115.

S109. After receiving the VSync-SF signal 2, the composition thread extracts, from the buffer queue, a drawn and rendered interpolated image located at the head of the queue, and performs composition processing on the drawn and rendered interpolated image.

As shown in FIG. 14, the composition thread receives the VSync-SF signal 2 at the time point t3. In this case, the composition thread extracts, from the buffer queue, the drawn and rendered image corresponding to the frame 1', for composition processing.

Correspondingly, after a lag of one VSync signal cycle, in other words, at a time point t4, the display driver receives the composite image that corresponds to the frame 1' and that is obtained by the composition thread through composition, and then drives the display screen to display the composite image corresponding to the frame 1'.

S110. When receiving the VSync-APP signal 3, the drawing and rendering thread reads a recorded Input event 3 (for example, the Input event is a MOVE event) from the input thread based on a timestamp of the VSync-APP signal 3.

S111. After receiving the Input event 3 (MOVE event), the drawing and rendering thread begins to process the Input event 3 (MOVE event), to be specific, draws and renders an image 3 based on the Input event 3.

Drawing and rendering of the Input event 3 are similar to those of the Input event 1. For details, refer to the foregoing descriptions. Details are not described herein.

Still referring to FIG. 13A and FIG. 13B, for example, after completing drawing and rendering of the frame data in the Input event 3, the drawing and rendering thread further buffers an image 3 in the buffer queue. In addition, in a process of drawing and rendering the image 3 based on the Input event 3, the drawing and rendering thread further sends the Input event 3 to the frame interpolation module, and the frame interpolation module determines whether to perform a frame supplementation operation.

S112. The frame interpolation module detects types of two adjacent Input events (the Input event 3 and an Input event 4), determines that the two adjacent Input events are a MOVE event and a MOVE event and drawing and rendering of the image 3 time out (the drawing and rendering thread still draws and renders the image 3 when receiving a VSync-APP signal 4), and triggers a frame supplementation operation.

For example, in some implementations, in a scenario in which the VSync-APP signal 4 is received in a process of drawing and rendering the image 3, and a VSync-APP signal 5 is not received yet after the drawing and rendering of the image 3 are completed, the frame supplementation operation may be completed before the VSync thread delivers the VSync-APP signal 5, to be specific, after receiving a frame supplementation instruction delivered by the frame interpolation module, the drawing and rendering thread directly reads the Input event 4 from the event thread based on a timestamp of the received VSync-APP signal 4, in other words, performs step S113, and then performs step S114.

In addition, it should be noted that, Input events that occur in this embodiment, for example, the Input event 0, the Input event 1, the Input event 2, the Input event 3, and the Input event 4, are generated in a time sequence. For example, when the process of the uninterrupted sliding operation includes DOWN, MOVE 1, MOVE 2, MOVE 3, and UP, an Input event 0, an Input event 1, an Input event 2, an Input event 3, and an Input event 4 that are sequentially generated as the finger of the user slides on the display screen are respectively a DOWN event, a MOVE 1 event, a MOVE 2 event, a MOVE 3 event, and an UP event.

It should be understood that the foregoing descriptions are merely examples listed for a better understanding of the technical solutions of this embodiment, and are not considered as a unique limitation on this embodiment.

S113. The drawing and rendering thread reads the recorded Input event 4 (for example, the Input event is a MOVE event, for example, the foregoing MOVE 3 event) from the input thread based on the timestamp of the VSync-APP signal 4.

S114. After receiving the Input event 4 (MOVE event), the drawing and rendering thread begins to process the Input event 4 (MOVE event), to be specific, draws and renders an image 4 based on the Input event 4.

Drawing and rendering of the Input event 4 are similar to those of the Input event 1. For details, refer to the foregoing descriptions. Details are not described herein.

Correspondingly, after obtaining an image 4 through drawing and rendering, the drawing and rendering thread also buffers the drawn and rendered image 4 in the buffer queue, so that when receiving a VSync-SF signal 4, the composition thread can extract the drawn and rendered image 4 from the buffer queue, for composition processing.

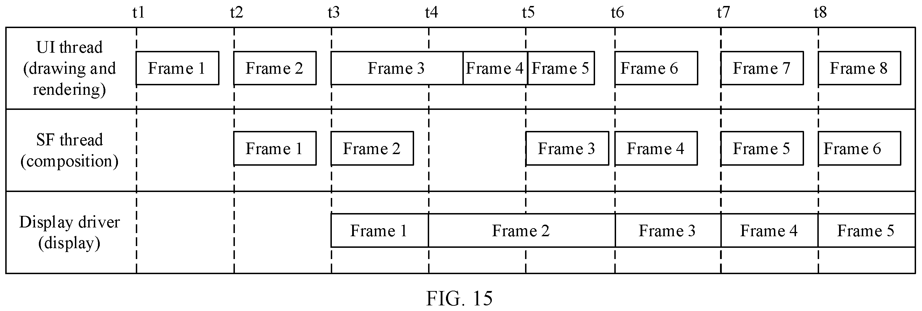

As shown in FIG. 15, when the drawing and rendering thread does not complete drawing and rendering of a frame 3 in time from t3 to t4, in other words, before the VSync-APP signal 4 is received, after receiving the VSync-APP signal 4, the drawing and rendering thread does not read the Input event 4 from the event thread based on the timestamp of the VSync-APP signal 4, and continues drawing and rendering the frame 3. When the drawing and rendering thread completes the drawing and rendering of the frame 3 before a time point t5, the frame interpolation module determines that frame supplementation needs to be performed, and remaining time meets duration required for drawing and rendering a frame 4, the drawing and rendering thread may read, from the input thread, the frame 4 corresponding to the time point t4, and then perform drawing and rendering.

Still referring to FIG. 15, for example, because the drawing and rendering of the frame 3 are not completed yet at the time point t4, the buffer queue has no image obtained after the drawing and rendering of the frame 3 are completed, and the composition thread does not perform a combination operation at the time point t4, and begins to perform composition processing only when reading, from the buffer queue at the time point t5, the image obtained after the drawing and rendering of the frame 3 are completed. Correspondingly, because the drawing and rendering thread performs supplementation for the lost frame 4, at all subsequent composition time points, in other words, after VSync-SF signals are received, when no drawing and rendering timeout or frame loss occurs, the composition thread can sequentially extract, from the buffer queue, an image corresponding to the frame 4, an image corresponding to a frame 5, an image corresponding to a frame 6, an image corresponding to a frame 7, and an image corresponding to a frame 8.

Correspondingly, the display driver does not normally obtain, only at the time point t5, an image obtained by the composition thread through composition, and content corresponding to the frame 2 is continuously displayed in a VSync signal cycle from t5 to FIG. 6. Subsequently, content corresponding to a new frame of data can be normally displayed through updating in each VSync signal cycle. In this way, because the content corresponding to the frame 2 is displayed for only one more VSync signal cycle, which is only a few milliseconds, the user does not perceive obvious freezing, and subsequently, content corresponding to sequentially changing frame data is normally updated in each VSync signal cycle, so that content displayed on the display screen does not jump.

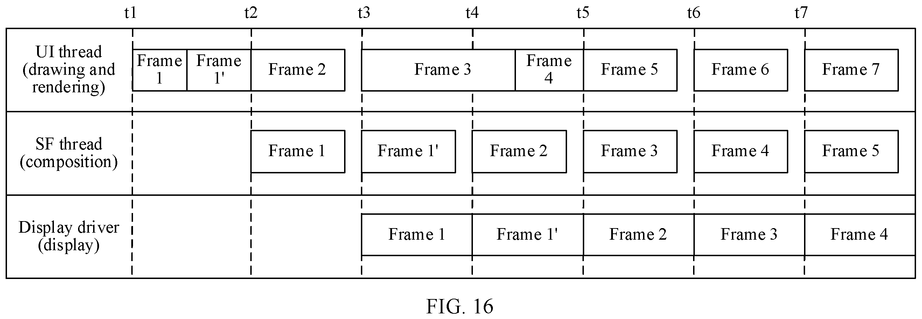

In addition, it should be noted that, in FIG. 15, if the frame 1' is interpolated after the frame 1 (the first frame) is drawn and rendered at the time point t1, if time of subsequently drawing and rendering the frame 3 exceeds only one VSync information cycle and frame supplementation is performed for the lost frame 4, finally, processing processes of the combination thread and the display driver are shown in FIG. 16, to be specific, in each VSync signal cycle, content displayed on the display screen is sequentially updated, and the content displayed on the display screen does not jump because no frame is lost.

S115. After receiving the VSync-SF signal 3, the composition thread extracts, from the buffer queue, a drawn and rendered image 2 located at the head of the queue, and performs composition processing on the drawn and rendered image 2.

As shown in FIG. 14, the composition thread receives the VSync-SF signal 3 at the time point t4. In this case, the composition thread extracts, from the buffer queue, the drawn and rendered image corresponding to the frame 2, for composition processing.

Correspondingly, after a lag of one VSync signal cycle, in other words, at the time point t5, the display driver receives a composite image that corresponds to the frame 2 and that is obtained by the composition thread through composition, and then drives the display screen to display the composite image corresponding to the frame 2.

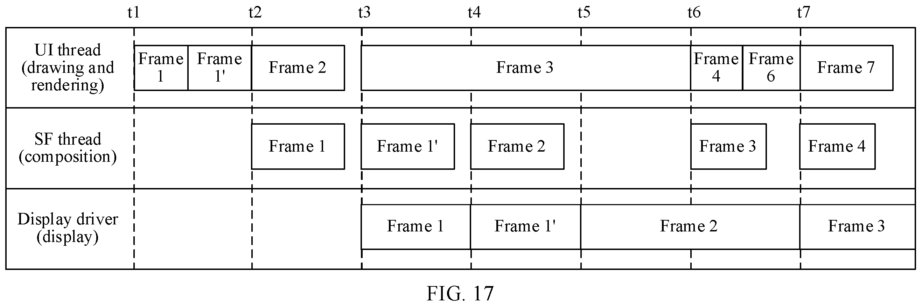

In addition, it should be noted that, based on the content shown in FIG. 13A and FIG. 13B, it is assumed that the drawing and rendering thread still does not complete the drawing and rendering of the image 3 when receiving the VSync-APP signal 5. As shown in FIG. 17, the drawing and rendering thread still draws and renders the frame 3 at the time point t5, and completes the drawing and rendering of the frame 3 only at a time point t6, in other words, when a VSync-APP signal 6 is received. Because the drawing and rendering of the frame 3 occupy t3 to t6, namely, three VSync signal cycles, the frame 4 is not drawn and rendered in time from t4 to t5 in which the frame 4 originally should be drawn and rendered, and the frame 4 is lost. Likewise, the frame 5 is not drawn and rendered in time from t5 to t6 in which the frame 5 originally should be drawn and rendered, and the frame 5 is lost. In other words, as shown in FIG. 17, during the drawing and rendering of the frame 3, two frames, namely, the frame 4 and the frame 5, are lost. To prevent the user from obviously perceiving freezing, when the VSync-APP signal 6 is received at the time point t6, supplementation may be performed for one frame, and then the frame 6 is drawn and rendered.

For example, during frame supplementation, it may be first determined whether drawing and rendering time of the frame 4 + frame 6 can be completed in a time cycle from t6 to t7. If the drawing and rendering time of the frame 4 + frame 6 can be completed in the time cycle from t6 to t7, the frame 4 corresponding to the time point t4 may be first read from the input event in the foregoing manner, for drawing and rendering. After drawing and rendering of the frame 4 are completed, the frame 6 originally corresponding to a timestamp of the VSync-APP signal 6 is normally read, for drawing and rendering. In this way, after the frame supplementation, only one frame (the frame 5) is finally lost. Subsequently, content corresponding to a new frame of data can be normally displayed through updating in each VSync signal cycle. In this way, because the content corresponding to the frame 2 is displayed for only one more VSync signal cycle, which is only a few milliseconds, the user does not perceive obvious freezing. Because supplementation is performed for one frame (the frame 4), the display screen does not directly jump from content of the frame 3 to content of the frame 6. Because there is content of the frame 4 between the content of the frame 3 and the content of the frame 6 for transition, jumping is not obvious.

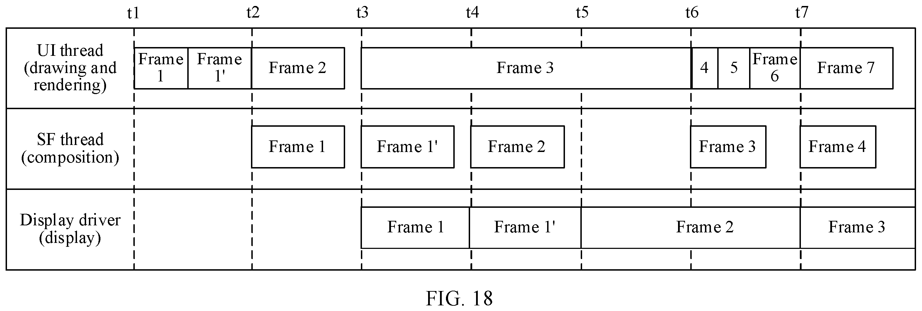

For example, if drawing and rendering of the frame 4 + frame 5 + frame 6 can be completed in the time cycle from t6 to t7, in other words, supplementation can be performed for two frames, the frame 4 corresponding to the time point t4 may be first read from the input event in the foregoing manner, for drawing and rendering. After the frame 4 is drawn and rendered, the frame 5 corresponding to the time point t5 continues to be read from the input event, for drawing and rendering. After drawing and rendering of the frame 5 are completed, the frame 6 originally corresponding to the timestamp of the VSync-APP signal 6 is normally read, for drawing and rendering. In this way, before the frame 7 is drawn and rendered when the VSync-APP signal 7 is received at the time point t7, supplementation can be performed for the lost frames 4 and 5 while it is ensured that the frame 6 is not lost, and finally, processing processes of the combination thread and the display driver are shown in FIG. 18, to be specific, in each VSync signal cycle, content displayed on the display screen is sequentially updated, and the content displayed on the display screen does not jump because no frame is lost.

In this way, in an initial period of the sliding operation, one frame is interpolated in advance for drawing and rendering, so that one more frame is buffered in the buffer queue, to reduce frameless composition cases caused by subsequent drawing and rendering timeout, and reduce display freezing. For example, when only one frame is lost, smooth transition can be implemented by using the interpolated frame, without freezing, thereby improving user experience.

In addition, when drawing and rendering time out, supplementation is performed for one or more lost frames in a frame supplementation manner, to reduce a frame loss caused by a VSync signal miss due to drawing and rendering timeout, so that content displayed on the display screen can smoothly change, to improve display smoothness, and reduce jumping, thereby further improving user experience.

To better understand the data processing method provided in this embodiment of this application, specific processing logic between the drawing and rendering thread and the frame interpolation module and specific implementation details of determining whether to perform frame interpolation or frame supplementation and determining a specific quantity of frames for which supplementation is performed in FIG. 13A and FIG. 13B are specifically described below.

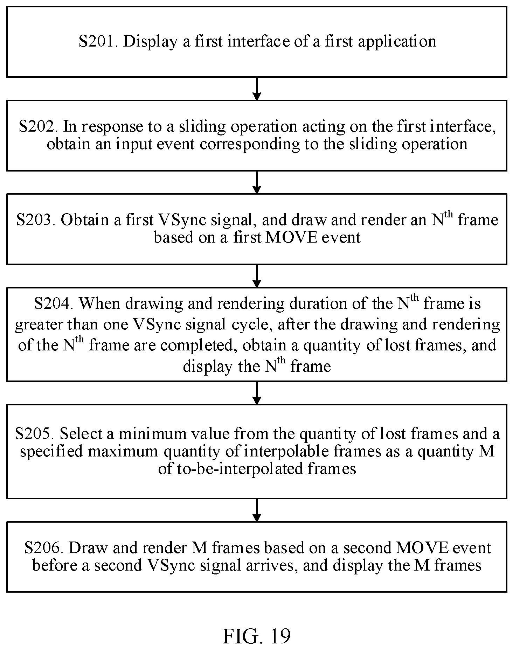

FIG. 19 is a schematic flowchart of a data processing method according to an embodiment of this application. As shown in FIG. 19, the method specifically includes the following steps.

S201. Display a first interface of a first application.

For example, the first application is a focus application currently running in a foreground. The first interface is an interface currently displayed by the first application. For example, the first application is an application of an instant messaging type. The first interface may be the foregoing moments interface shown in FIG. 7, and content displayed on the first interface is, for example, an image shown in (1) in FIG. 7.

S202. In response to a sliding operation acting on the first interface, obtain an input event corresponding to the sliding operation.

For example, the input event corresponding to the sliding operation may include a DOWN event, a MOVE event, and an UP event.

In addition, for obtaining the input event, refer to the foregoing descriptions of interaction between the display screen, the sensor, the sensor driver, EventHub, the input reader, the input dispatcher, the window manager, the input manager, and the input thread. Details are not described herein again.

S203. Obtain a first VSync signal, and draw and render an N^{th} frame based on a first MOVE event.

Specifically, the first MOVE event is extracted, based on a timestamp of the first VSync signal, from the input event corresponding to the sliding operation, and the N^{th} frame is an image data frame that corresponds to the first MOVE event and that needs to be dawn and rendered.

It may be understood that the first VSync signal in this embodiment may be, for example, a VSync signal received at any one of the foregoing time points, for example, any time point in t1 to t7 in FIG. 18. Correspondingly, the first MOVE event is an event corresponding to the time point of the VSync signal, and may be a DOWN event, a MOVE event, or an UP event during actual application. A frame interpolation (frame supplementation) scenario to which the data processing method provided in this embodiment is directed is specifically directed to a MOVE event. Therefore, an example in which the event extracted, based on the timestamp of the first VSync signal, from the input event corresponding to the sliding operation is a MOVE event is used herein. To facilitate distinguishing from MOVE time corresponding to a timestamp of a VSync signal received at other time, herein, the MOVE event extracted, based on the timestamp of the first VSync signal, from the input event corresponding to the sliding operation is referred to as the first MOVE event.

It should be understood that the foregoing descriptions are merely examples listed for a better understanding of the technical solutions of this embodiment, and are not considered as a unique limitation on this embodiment.

In addition, it should be noted that, in drawing and rendering, composition, and display processes, each stage has a corresponding VSync signal. The foregoing first VSync signal, a subsequent second VSync signal, and a subsequent third VSync signal are all vertical synchronization signals used to trigger drawing and rendering procedures, and the vertical synchronization signal used to trigger a drawing and rendering procedure is specifically the foregoing VSync-APP signal.

Correspondingly, a vertical synchronization signal used to trigger a composition procedure is specifically the foregoing VSync-SF signal, and a vertical synchronization signal used to trigger a display screen refresh procedure is specifically the foregoing VSync-HW signal.

In addition, it should be further noted that, during actual application, two adjacent VSync-APP signals are separated by first duration, two adjacent VSync-SF signals are separated by second duration, and two adjacent VSync-HW signals are separated by third duration. To be specific, at an interval of first duration, the first application receives one VSync-APP signal. For example, the foregoing application main thread (UI thread) receives one VSync-APP signal, or a drawing and rendering thread directly receives one VSync-APP signal. For example, as described above, the VSync-APP signal 1 is received at the time point t1, and the VSync-APP signal 2 is received at the time point t2.

Correspondingly, at an interval of second duration, a composition thread for performing composition processing receives one VSync-SF signal, and at an interval of third duration, a display driver receives one VSync-HW signal.

In addition, it should be further noted that, in some implementations, the first duration, the second duration, and the third duration may be same duration, for example, the foregoing VSync signal cycle. The first duration, the second duration, and the third duration are related to a frame rate at which the terminal device performs data processing. For example, in a scenario of 60 Hz, a VSync signal cycle is 16.6 ms, to be specific, every 16.6 ms, a VSync thread generates a corresponding VSync-APP signal and sends the VSync-APP signal to the drawing and rendering thread. Likewise, every 16.6 ms, the VSync thread generates a corresponding VSync-SF signal and sends the VSync-SF signal to the composition thread. Likewise, every 16.6 ms, the VSync thread generates a corresponding VSync-HW signal and sends the VSync-HW signal to the display driver.

In addition, it may be learned from the foregoing descriptions that, time at which the display driver obtains content obtained by the composition thread through composition and drives a display screen to perform display lags behind time at which the composition thread begins to perform a composition operation, and the time at which the composition thread begins to perform the composition operation lags behind time at which the drawing and rendering thread begins to perform a drawing and rendering operation. In other words, sending time at which the VSync thread sends a VSync-HW signal lags behind sending time of a Sync-SF signal, and the sending time of the VSync-SF signal lags behind sending time of a VSync-APP signal. For example, if the sending time of the VSync-HW signal lags behind the sending time of the VSync-SF signal by one VSync signal cycle, and the sending time of the VSync-SF signal lags behind the sending time of the VSync-APP signal by one VSync signal cycle, the VSync thread may send a VSync-APP signal 1 to the drawing and rendering thread at the foregoing time point t1; send a VSync-APP signal 2 to the drawing and rendering thread at the foregoing time point t2, and simultaneously send a VSync-SF signal 1 to the composition thread; and send a VSync-APP signal 3 to the drawing and rendering thread at the foregoing time point t3, and simultaneously send a VSync-SF signal 2 to the composition thread and send a VSync-HW signal 1 to the display driver.

In addition, it should be further noted that, in some other implementations, the first duration, the second duration, and the third duration may be different, and specifically meet: the third duration > the second duration > the first duration. In this way, it can be ensured that a next stage begins only after processing of a current stage is completed, and it is ensured that the next stage can obtain data obtained in the current stage through processing. For example, the display driver can obtain content obtained by the composition thread through composition, and the composition thread can obtain content obtained by the drawing and rendering thread through drawing and rendering.

It should be understood that the foregoing descriptions are merely examples listed for a better understanding of the technical solutions of this embodiment, and are not considered as a unique limitation on this embodiment.

In addition, a premise of triggering the VSync thread to generate a VSync-APP signal, a VSync-SF signal, and a VSync-HW signal based on the VSync signal cycle and perform sending based on the VSync signal cycle may be that a request is initiated to the VSync thread when an input event is a DOWN event, as described above.

For example, when an event extracted, based on a timestamp of a VSync-APP signal, from an input event corresponding to a sliding operation is a DOWN event, the first application, for example, the foregoing drawing and rendering thread, sends a first message (a request for requesting a VSync-APP signal) to the VSync thread in an SF thread. In this way, the VSync thread can generate a corresponding VSync-APP signal based on the first duration (for example, one VSync signal cycle), and send the corresponding VSync-APP signal to the drawing and rendering thread of the first application in each VSync signal cycle.

Correspondingly, when the event extracted, based on the timestamp of the VSync-APP signal, from the input event corresponding to the sliding operation is a DOWN event, a buffer thread in the SF thread may send a second message (a request for requesting a VSync-SF signal) to the VSync thread. In this way, the VSync thread can generate a corresponding VSync-SF signal based on the second duration (for example, one VSync signal cycle), and send the corresponding VSync-SF signal to the composition thread in each VSync signal cycle.

Correspondingly, when the event extracted, based on the timestamp of the VSync-APP signal, from the input event corresponding to the sliding operation is a DOWN event, the display driver may send a third message (a request for requesting a VSync-HW signal) to the VSync thread. In this way, the VSync thread can generate a corresponding VSync-HW signal based on the third duration (for example, one VSync signal cycle), and send the corresponding VSync-HW signal to the display driver in each VSync signal cycle.

For a relationship between a timestamp of each VSync-APP signal, a reporting point, and an input event, refer to the foregoing descriptions. Based on the relationship, a specific reporting point whose corresponding input data needs to be obtained can be determined, to obtain an image frame corresponding to the reporting point. For obtaining the image frame, refer to the foregoing descriptions. Details are not described herein again.

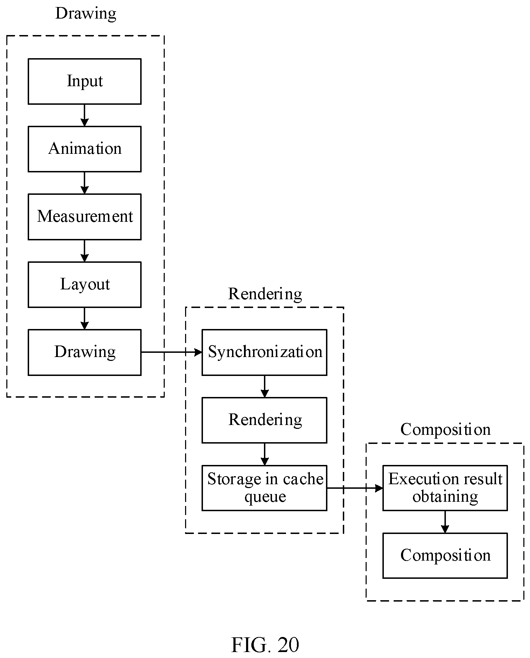

Referring to FIG. 20, for example, drawing and rendering may be specifically divided into a drawing stage and a rendering stage. The drawing stage specifically includes: input (used to transfer an input event to a corresponding object for processing), animation (used to calculate a position of an animation of each frame), measurement (used to obtain and maintain sizes of each view (View) and each view group (ViewGroup) based on settings of control attributes in an xml layout file and code), layout (used to determine a display position of a control based on information obtained by using a policy), and drawing (used to draw all layers in an application program window on a canvas (canvas) and construct a drawing instruction after the display position of the control is determined).

Still referring to FIG. 20, for example, the rendering stage specifically includes: synchronization (used to synchronize the drawn drawing instruction from a CPU), rendering (used to adjust brightness, contrast, saturation, and the like of the drawn layers), and storage in the buffer queue (used to store a rendered execution result in the buffer queue). Specific drawing and rendering are not described in detail in this embodiment.

S204. When drawing and rendering duration of the N^{th} frame is greater than one VSync signal cycle, after the drawing and rendering of the N^{th} frame are completed, obtain a quantity of lost frames, and display the N^{th} frame.

With reference to FIG. 18, for example, when the N^{th} frame is a frame 3 in FIG. 18, because drawing and rendering duration of the frame 3 occupies three VSync signal cycles, after drawing and rendering of the frame 3 are completed, the foregoing frame interpolation module obtains a quantity of lost frames. In addition, after receiving a VSync-SF signal, the SF thread composites drawn and rendered content of the frame 3, and after receiving a VSync-HW signal, the display driver displays content that is of the frame 3 and that is obtained by the SF thread through composition.

S205. Select a minimum value from the quantity of lost frames and a specified maximum quantity of interpolable frames as a quantity M of to-be-interpolated frames.

An implementation of obtaining the quantity of lost frames in step S204 and finally determining the quantity M of to-be-interpolated frames in step S205 may be, for example, as follows:
(1) Determine first time Tbegin at which the drawing and rendering of the N^{th} frame begin and second time Tend at which the drawing and rendering of the N^{th} frame end.
   Tbegin is time at which the drawing and rendering thread calls a doFrame interface (an interface configured to begin drawing and rendering), for example, the foregoing time point at which each VSync-APP signal is received, such as t1, t2, or t3. Tend is an actual time point at which drawing and rendering are completed.
(2) Calculate the quantity count of lost frames based on Tbegin, Tend, and specified drawing and rendering duration (for example, one VSync signal cycle, hereinafter represented as VSync) corresponding to the N^{th} frame.

For example, in an implementation, count = floor[(Tend - Tbegin)/VSync] - 1.

It should be noted that, the specified drawing and rendering duration is maximum drawing and rendering duration corresponding to each frame of data in an ideal case, and is, for example, one VSync signal cycle.

(3) Select a minimum value from the quantity count of lost frames and the specified maximum quantity of interpolable frames as a quantity of frames that need to be interpolated after the current time of drawing and rendering, namely, the quantity M of to-be-interpolated frames.

For example, to avoid impact of frame interpolation on subsequent data processing, the maximum quantity of interpolable frames may be set to 2.

In other words, M = min(count, 2).

For example, if it is learned, through calculation, that one frame is currently lost, in other words, count = 1, the quantity of frames that need to be interpolated after the current time of drawing and rendering is M = 1; or if calculated count is greater than 2, the quantity of frames that need to be interpolated after the current time of drawing and rendering is M = 2.

Further, during actual application, actual remaining time available for a frame supplementation operation may be insufficient. To avoid improper M determined according to the foregoing manner, a quantity of frames that can be interpolated in remaining time may be predicted, and then a minimum value is selected, as the quantity of frames that need to be interpolated after the current time of drawing and rendering, from the predicted quantity of interpolable frames and M determined according to the foregoing manner. A specific implementation may be as follows:

(4) Determine receiving time TnextVsyn of a next VSync-APP signal based on a VSync-APP signal sending cycle.

For example, the VSync-APP signal sending cycle is one VSync signal cycle, for example, duration between any two (t1 and t2) of the foregoing time points. As shown in FIG. 15, when a frame 4 is lost because a frame 3 whose drawing and rendering begin at a time point t3 time out, the receiving time TnextVsyn of the next VSync-APP signal may be a time point t5 in FIG. 15.

(5) Determine, based on actual drawing and rendering duration of a plurality of frames of image data whose drawing and rendering are completed, average drawing and rendering duration (T average) of each of the N frames whose drawing and rendering are completed.

For example, drawing and rendering duration specified for each frame is one VSync signal cycle, for example, 16.6 ms. If duration required for completing drawing and rendering of a frame 1, a frame 2, and a frame 3 is respectively 4.6 ms, 5.6 ms, and 16.8 ms in an actual job, T average = (4.6 ms + 5.6 ms + 16.8 ms)/3 = 9 ms is calculated based on the actual drawing and rendering duration of the three frames.

(6) Calculate the predicted quantity countAllow of interpolable frames based on TnextVsyn, Tend, and T average.

For example, in an implementation, countAllow ≤ (TnextVsyn - Tend)/T average.

For example, TnextVsyn - Tend = 16.3 ms. In this case, countAllow ≤ 1.45, and it may be learned, through rounding, that finally countAllow = 1.

(7) M = min(M (obtained in the foregoing step (3)), countAllow), to be specific, select a minimum value from countAllow, count, and the specified maximum quantity of interpolable frames (for example, 2) as the quantity of frames that need to be interpolated after the current time of drawing and rendering.

It should be understood that the foregoing descriptions are merely examples listed for a better understanding of the technical solutions of this embodiment, and are not considered as a unique limitation on this embodiment.

In addition, the foregoing determining a relationship between an image data frame that needs to be interpolated and a lost image data frame is specifically determining a specific lost frame of image data that is an interpolated image data frame; and then searching an input thread for a corresponding input event based on a time point at which the lost image data frame theoretically needs to be drawn and rendered (a timestamp of a VSync-APP signal received at this time point), and then using a frame in the input event as the frame that needs to be interpolated and drawing and rendering the frame.

A timestamp corresponding to a frame that needs to be interpolated may meet Tend - (Tend - Tbegin) % VSync. For example, VSync = 10 ms, Tend = 45 ms, and Tbegin = 30 ms. In this case, a finally calculated timestamp corresponding to the frame that needs to be interpolated is 40 ms. For example, still in FIG. 15, when a frame 4 is lost because drawing and rendering of a frame 3 time out, a timestamp that is calculated according to this manner and that corresponds to a frame that needs to be interpolated is 40 ms, to be specific, the frame that needs to be interpolated is the frame 4 theoretically corresponding to a time point t4.

It should be understood that the foregoing descriptions are merely examples listed for a better understanding of the technical solutions of this embodiment, and are not considered as a unique limitation on this embodiment. For a scenario in which a plurality of frames are lost, processing can also be performed according to the foregoing descriptions. Details are not described herein.

S206. Draw and render M frames based on a second MOVE event before a second VSync signal arrives, and display the M frames.

It should be noted that, the second VSync signal is the first VSync signal received after the drawing and rendering of the N^{th} frame are completed, and the second MOVE event is extracted, based on timestamps of all or some VSync signals received in a process of drawing and rendering the N^{th} frame, from the input event corresponding to the sliding operation.

With reference to FIG. 18, for example, the N^{th} frame is still a frame 3. In this case, drawing and rendering of the frame 3 are not completed until the time point t6, and the first VSync signal received after the drawing and rendering of the frame 3 are completed is a VSync signal received at the time point t6.

Correspondingly, the second MOVE event is extracted, based on timestamps of all or some VSync signals received in a process of drawing and rendering the frame 3, for example, in time from t2 to t6, from the input event corresponding to the sliding operation.

For example, still in FIG. 18, for a scenario in which the second MOVE event is extracted, based on timestamps of all VSync signals received in the process of drawing and rendering the N^{th} frame, from the input event corresponding to the sliding operation, the second MOVE event is specifically a MOVE event extracted, based on a timestamp of a VSync signal received at a time point t4, from the input event corresponding to the sliding operation, and a MOVE event extracted, based on a timestamp of a VSync signal received at a time point t5, from the input event corresponding to the sliding operation. Correspondingly, the M frames finally interpolated behind the N^{th} frame (frame 3) are a frame 4 and a frame 5.

Processing of drawing and rendering and display of the interpolated M frames is similar to that of drawing and rendering and display of the N^{th} frame, and details are not described herein.

It should be understood that the foregoing descriptions are merely examples listed for a better understanding of the technical solutions of this embodiment, and are not considered as a unique limitation on this embodiment.

Therefore, in the data processing method provided in this embodiment, when drawing and rendering time out, supplementation is performed for one or more lost frames in a frame supplementation manner, to reduce a frame loss caused by a VSync signal miss due to drawing and rendering timeout, so that content displayed on the display screen can smoothly change, to improve display smoothness, and reduce jumping, thereby further improving user experience.

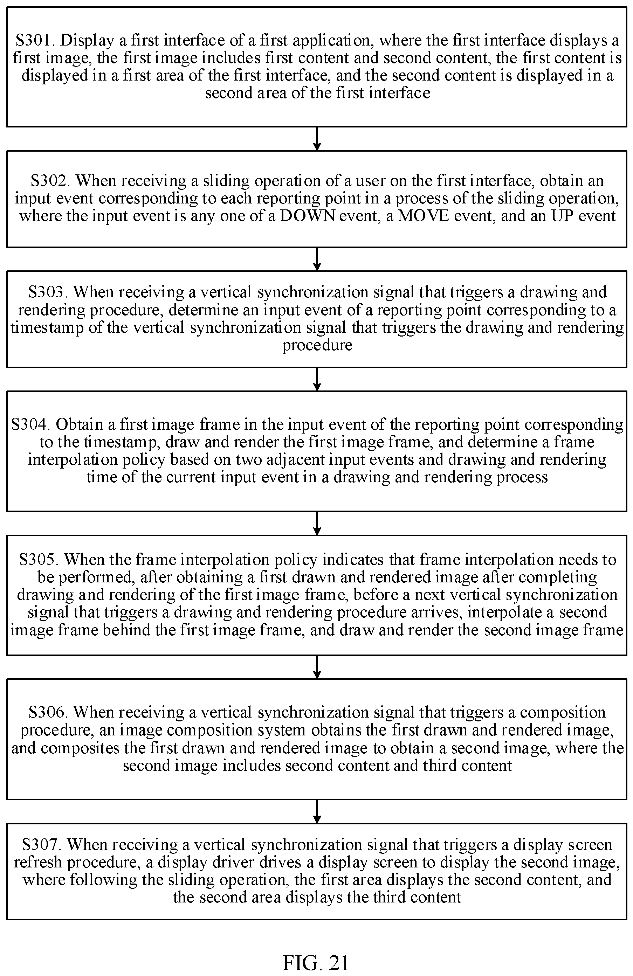

FIG. 21 is a schematic flowchart of a data processing method according to an embodiment of this application. As shown in FIG. 21, the method specifically includes the following steps.

S301. Display a first interface of a first application, where the first interface displays a first image, the first image includes first content and second content, the first content is displayed in a first area of the first interface, and the second content is displayed in a second area of the first interface.

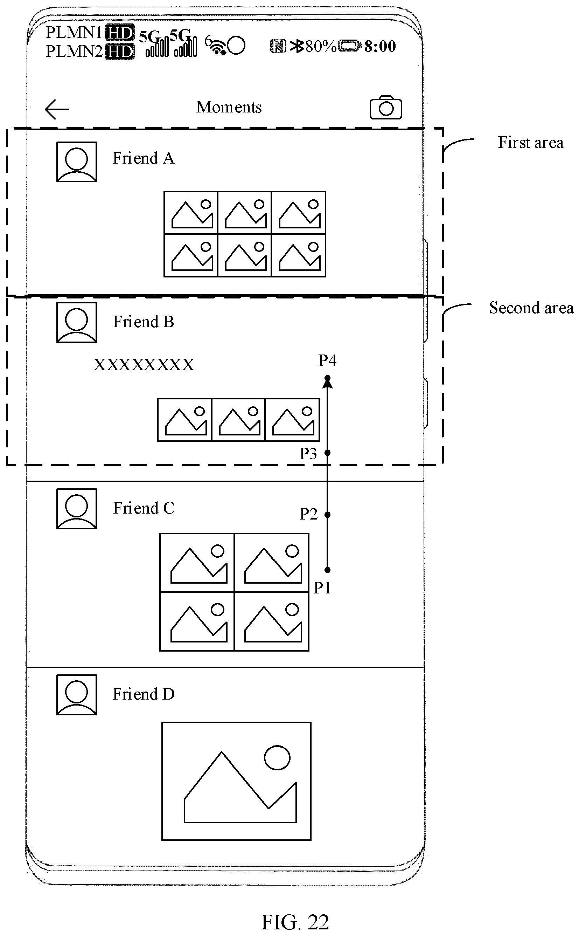

For example, the first image is shown in FIG. 22. The first content is content that is related to a friend A and that is displayed in the first area shown in FIG. 22, and the second content is content that is related to a friend B and that is displayed in the second area shown in FIG. 22.

S302. When receiving a sliding operation of a user on the first interface, obtain an input event corresponding to each reporting point in a process of the sliding operation, where the input event is any one of a DOWN event, a MOVE event, and an UP event.

For obtaining the input event, refer to the foregoing descriptions of interaction between the display screen, the sensor, the sensor driver, EventHub, the input reader, the input dispatcher, the window manager, the input manager, and the input thread. Details are not described herein again.

S303. When receiving a vertical synchronization signal that triggers a drawing and rendering procedure, determine an input event of a reporting point corresponding to a timestamp of the vertical synchronization signal that triggers the drawing and rendering procedure.

For specific descriptions of the vertical synchronization signal (VSync-APP signal) that triggers the drawing and rendering procedure, the following vertical synchronization signal (VSync-SF signal) that triggers a composition procedure, and the following vertical synchronization signal (VSync-HW signal) that triggers a display screen refresh procedure, refer to the foregoing embodiments. Details are not described herein again.

S304. Obtain a first image frame in the input event of the reporting point corresponding to the timestamp, draw and render the first image frame, and determine a frame interpolation policy based on two adjacent input events and drawing and rendering time of the current input event in a drawing and rendering process.

For specific implementation details of the drawing and rendering, refer to the foregoing descriptions. Details are not described herein.

In addition, for whether a frame interpolation module needs to participate in the drawing and rendering process to perform frame interpolation (first-frame interpolation or frame supplementation (frame interpolation) after a frame loss) determining processing, refer to the descriptions after S103 in the foregoing embodiments. Details are not described herein.

In addition, it may be learned from the foregoing descriptions that, based on the data processing method provided in this application, a case in which frame interpolation is performed in a drawing and rendering stage may be divided into interpolating one frame of image data behind the first frame in an initial period of a sliding operation, and performing supplementation for one or more frames of image data when a frame loss is caused by drawing and rendering timeout in a process of the sliding operation. Therefore, in this embodiment, the determining a frame interpolation policy based on two adjacent input events and drawing and rendering time of the current input event may include:
when the two adjacent input events are respectively a DOWN event and a MOVE event, adding an offset to a previous Input event, to generate a new Input event as a frame interpolation event, to obtain a frame interpolation policy;
   or
when the two adjacent input events are respectively different MOVE events, and the drawing and rendering time of the current input event exceeds specified drawing and rendering duration, determining a quantity of frames that need to be interpolated after the current time of drawing and rendering and a relationship between an image data frame that needs to be interpolated and a lost image data frame, and generating a frame supplementation instruction based on the quantity of frames and the relationship, to obtain the frame interpolation policy.

It may be understood that, the implementation scenario in which the frame interpolation policy is a frame interpolation event in this embodiment is the foregoing solution of interpolating one frame behind the first image data frame. For specific implementation details, refer to the foregoing descriptions. Details are not described herein again.

In addition, it should be further understood that, the implementation scenario in which the frame interpolation policy is generating a frame supplementation instruction in this embodiment is the foregoing solution of determining a quantity of to-be-interpolated frames after a frame loss, and then performing frame interpolation (frame supplementation). For specific implementation details, refer to the foregoing descriptions. Details are not described herein again.

In other words, the determining a frame interpolation policy in this embodiment is specifically processing logic of essentially determining, by the frame interpolation module, whether first-frame interpolation needs to be performed, or determining whether current drawing and rendering time out and consequently a frame loss is caused, and then frame supplementation needs to be performed. During actual application, when a device implements the data processing method provided in this application, program instructions may not include a step of generating a frame interpolation policy. Instead, when a first-frame interpolation condition is met, a first-frame interpolation procedure may be directly triggered; and when a condition of frame supplementation after a frame loss is met, a quantity of interpolable frames may be directly determined, and then frame interpolation may be performed.

For example, when the frame interpolation policy includes a frame interpolation event, it may be determined that the frame interpolation policy indicates that frame interpolation needs to be performed. In this case, after obtaining a first drawn and rendered image after completing drawing and rendering of a first image frame (for example, the foregoing frame 1), before a next VSync-APP signal, for example, the foregoing VSync-APP signal 2 received at the time point t2, arrives, the drawing and rendering thread uses a frame of image data (for example, the foregoing partial data in the frame 1, namely, the frame 1') in the frame interpolation event as a second image frame, interpolates the second image frame behind an N^{th} frame, and draws and renders the second image frame.

For example, when the frame interpolation policy includes a frame supplementation instruction, it may be determined that the frame interpolation policy indicates that frame interpolation needs to be performed. In this case, after obtaining a first drawn and rendered image after completing drawing and rendering of a first image frame (for example, the foregoing frame 3), before a next VSync-APP signal, for example, the foregoing VSync-APP signal 5 received at the time point t5, arrives, the drawing and rendering thread determines, based on a relationship in the frame supplementation instruction, a timestamp corresponding to an input event in which each piece of image frame data that is in a quantity of frames and that needs to be interpolated is located, for example, the timestamp of the VSync-APP signal 4 corresponding to the frame 4; and obtains, as a second image frame, image frame data in an input event of a reporting point corresponding to each timestamp, and draws and renders each second image frame.

It may be understood that when lost frames include the frame 4, a frame supplementation operation may be as follows: Before a VSync-APP signal 6 received at a time point t6 arrives, only one frame, namely, the frame 4, is selected as a second image frame based on the frame interpolation policy, and the frame 4 is first drawn and rendered when it is predicted that drawing of a frame 5 is not affected.

In addition, it may be understood that when lost frames include the frame 4 and the frame 5, a frame supplementation operation may be as follows: Before a VSync-APP signal 7 received at a time point t7 arrives, when it is predicted that drawing and rendering of the frame 6 are not affected, in time from end time at which drawing and rendering of the frame 3 are completed to the time point t7, if two frames of image data are allowed to be drawn and rendered in remaining time, both the frame 4 and the frame 5 can be used as second image frames, and the frame 4 and the frame 5 can be sequentially drawn and rendered. After drawing and rendering of the frame 5 are completed, the frame 6 can continue to be drawn and rendered in this cycle.

It should be understood that the foregoing descriptions are merely examples listed for a better understanding of the technical solutions of this embodiment, and are not considered as a unique limitation on this embodiment.

S305. When the frame interpolation policy indicates that frame interpolation needs to be performed, after obtaining a first drawn and rendered image after completing drawing and rendering of the first image frame, before a next vertical synchronization signal that triggers a drawing and rendering procedure arrives, interpolate a second image frame behind the first image frame, and draw and render the second image frame.

For example, when the frame interpolation policy includes a frame interpolation event, it may be determined that the frame interpolation policy indicates that frame interpolation needs to be performed. In this case, after obtaining a first drawn and rendered image after completing drawing and rendering of a first image frame (for example, the foregoing frame 1), before a next VSync-APP signal, for example, the foregoing VSync-APP signal 2 received at the time point t2, arrives, the drawing and rendering thread uses a frame of image data (for example, the foregoing partial data in the frame 1, namely, the frame 1') in the frame interpolation event as a second image frame, interpolates the second image frame behind the first image frame, and draws and renders the second image frame.

For example, when the frame interpolation policy includes a frame supplementation instruction, it may be determined that the frame interpolation policy indicates that frame interpolation needs to be performed. In this case, after obtaining a first drawn and rendered image after completing drawing and rendering of a first image frame (for example, the foregoing frame 3), before a next VSync-APP signal, for example, the foregoing VSync-APP signal 5 received at the time point t5, arrives, the drawing and rendering thread determines, based on a relationship in the frame supplementation instruction, a timestamp corresponding to an input event in which each piece of image frame data that is in a quantity of frames and that needs to be interpolated is located, for example, the timestamp of the VSync-APP signal 4 corresponding to the frame 4; and obtains, as a second image frame, image frame data in an input event of a reporting point corresponding to each timestamp, and draws and renders each second image frame.

It may be understood that when lost frames include the frame 4, a frame supplementation operation may be as follows: Before a VSync-APP signal 6 received at a time point t6 arrives, only one frame, namely, the frame 4, is selected as a second image frame based on the frame interpolation policy, and the frame 4 is first drawn and rendered when it is predicted that drawing of a frame 5 is not affected.

In addition, it may be understood that when lost frames include the frame 4 and the frame 5, a frame supplementation operation may be as follows: Before a VSync-APP signal 7 received at a time point t7 arrives, when it is predicted that drawing and rendering of the frame 6 are not affected, in time from end time at which drawing and rendering of the frame 3 are completed to the time point t7, if two frames of image data are allowed to be drawn and rendered in remaining time, both the frame 4 and the frame 5 can be used as second image frames, and the frame 4 and the frame 5 can be sequentially drawn and rendered. After drawing and rendering of the frame 5 are completed, the frame 6 can continue to be drawn and rendered in this cycle.

It should be understood that the foregoing descriptions are merely examples listed for a better understanding of the technical solutions of this embodiment, and are not considered as a unique limitation on this embodiment.

In addition, it may be learned from the foregoing descriptions that, during actual application, only one of the following solutions may be selected: interpolating one frame behind the first frame, for example, interpolating the frame 1' behind the frame 1 in the foregoing descriptions; and performing supplementation for some or all lost frames after a frame loss. Alternatively, both the following solutions may be selected: interpolating one frame behind the first frame; and subsequently performing supplementation for some or all lost frames after a frame loss. For specific implementation details, refer to the foregoing descriptions. Details are not described herein again.

S306. When receiving a vertical synchronization signal that triggers a composition procedure, an image composition system obtains the first drawn and rendered image, and composites the first drawn and rendered image to obtain a second image, where the second image includes second content and third content.

S307. When receiving a vertical synchronization signal that triggers a display screen refresh procedure, a display driver drives a display screen to display the second image, where following the sliding operation, the first area displays the second content, and the second area displays the third content.

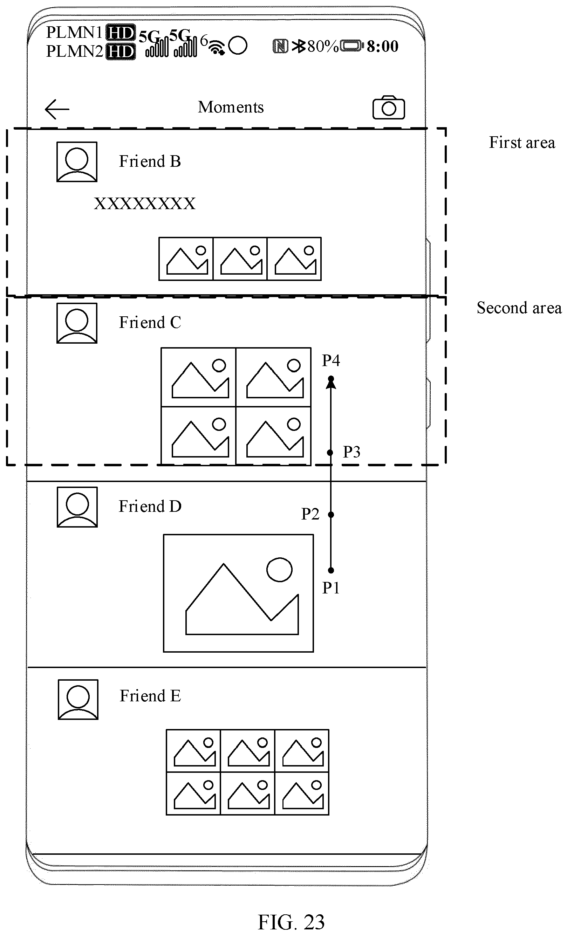

For example, when the second image is shown in FIG. 23, the related content that is of the friend B and that is originally displayed in the second area in FIG. 22 is displayed in the first area in FIG. 23, and the third content (related content of a friend C in FIG. 22 and FIG. 23) is displayed in the second area.

It should be understood that the foregoing descriptions are merely examples listed for a better understanding of the technical solutions of this embodiment, and are not considered as a unique limitation on this embodiment.

In addition, for specific details of performing, by a composition thread, a composition operation and driving, by the display driver, the display screen to display content obtained by the composition thread through composition, refer to the foregoing descriptions. Details are not described herein again.

Therefore, in the data processing method provided in this embodiment, in an initial period of the sliding operation, one frame is interpolated in advance for drawing and rendering, so that one more frame is buffered in a buffer queue, to reduce frameless composition cases caused by subsequent drawing and rendering timeout, and reduce display freezing. For example, when only one frame is lost, smooth transition can be implemented by using the interpolated frame, without freezing, thereby improving user experience.

In addition, when drawing and rendering time out, supplementation is performed for one or more lost frames in a frame supplementation manner, to reduce a frame loss caused by a VSync signal miss due to drawing and rendering timeout, so that content displayed on the display screen can smoothly change, to improve display smoothness, and reduce jumping, thereby further improving user experience.

In addition, it may be understood that, to implement the foregoing functions, the terminal device includes corresponding hardware and/or software modules for performing the functions. Algorithm steps in the examples described with reference to the embodiments disclosed in this specification can be implemented by hardware or a combination of hardware and computer software in this application. Whether a function is performed by hardware or hardware driven by computer software depends on particular applications and design constraint conditions of the technical solutions. Persons skilled in the art may use different methods to implement the described functions with reference to embodiments for each particular application, but it should not be considered that the implementation goes beyond the scope of this application.

In addition, it should be noted that, in an actual application scenario, the data processing method that is provided in the foregoing embodiments and that is implemented by the terminal device may alternatively be performed by a chip system included in the terminal device. The chip system may include a processor. The chip system may be coupled to a memory, so that the chip system invokes, when running, a computer program stored in the memory, to implement the foregoing steps performed by the terminal device. The processor in the chip system may be an application processor or a processor that is not an application processor.

In addition, an embodiment of this application further provides a computer-readable storage medium. The computer storage medium stores computer instructions, and when the computer instructions are run on a terminal device, the terminal device is enabled to perform the foregoing related method steps, to implement the data processing method in the foregoing embodiments.

In addition, an embodiment of this application further provides a computer program product. When the computer program product is run on a terminal device, the terminal device is enabled to perform the foregoing related method steps, to implement the data processing method in the foregoing embodiments.

In addition, an embodiment of this application further provides a chip (which may alternatively be a component or module). The chip may include one or more processing circuits and one or more transceiver pins. The transceiver pin and the processing circuit communicate with each other through an internal connection path. The processing circuit performs the foregoing related method steps, to implement the data processing method in the foregoing embodiments, to control a receive pin to receive a signal, and control a transmit pin to transmit a signal.

In addition, it may be learned from the foregoing descriptions that, the terminal device, the computer-readable storage medium, the computer program product, or the chip provided in embodiments of this application may be configured to perform the corresponding method provided above. Therefore, for beneficial effects that can be achieved by the terminal device, the computer-readable storage medium, the computer program product, or the chip, refer to the beneficial effects in the corresponding method provided above. Details are not described herein again.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A data processing method, wherein the data processing method comprises:
displaying (S201) a first interface of a first application;
in response to a sliding operation acting on the first interface, obtaining (S202) an input event corresponding to the sliding operation;
obtaining (S203) a first VSync signal, and drawing and rendering an N^{th} frame based on a first MOVE event, wherein the first MOVE event is extracted, based on a timestamp of the first VSync signal, from the input event corresponding to the sliding operation;
when drawing and rendering duration of the N^{th} frame is greater than one VSync signal cycle, after the drawing and rendering of the N^{th} frame are completed, obtaining (S204) a quantity of lost frames, and displaying the N^{th} frame;
selecting (S205) a minimum value from the quantity of lost frames and a specified maximum quantity of interpolable frames as a quantity M of to-be-interpolated frames; and
drawing and rendering and displaying (S206) M interpolated frames based on a second MOVE event before a second VSync signal arrives, and displaying the M interpolated frames, wherein the second VSync signal is the first VSync signal received after the drawing and rendering of the N^{th} frame are completed, and the second MOVE event is extracted, based on timestamps of all or some VSync signals received in a process of drawing and rendering the N^{th} frame, from the input event corresponding to the sliding operation.

2. The data processing method according to claim 1, wherein the obtaining (204) the quantity of lost frames comprises:
determining first time at which the drawing and rendering of the N^{th} frame begin and second time at which the drawing and rendering of the N^{th} frame end; and
calculating the quantity of lost frames based on the first time, the second time, and specified drawing and rendering duration corresponding to the N^{th} frame, wherein the specified drawing and rendering duration is one VSync signal cycle.

3. The data processing method according to claim 2, wherein the quantity of lost frames is calculated according to the following formula based on the first time, the second time, and the specified drawing and rendering duration corresponding to the N^{th} frame: $Quantity of lost frames = floor \left[\left(second time-first time\right)/VSync signal cycle\right] - 1 .$

4. The data processing method according to claim 2, wherein the selecting (S205) the minimum value from the quantity of lost frames and thr specified maximum quantity of interpolable frames as the quantity M of to-be-interpolated frames comprises:
determining receiving time of the second VSync signal based on the VSync signal cycle;
determining, based on drawing and rendering duration of N frames whose drawing and rendering are completed, average drawing and rendering duration of each of the N frames whose drawing and rendering are completed;
calculating a predicted quantity of interpolable frames based on the receiving time, the second time, and the average drawing and rendering duration; and
selecting a minimum value from the predicted quantity of interpolable frames, the quantity of lost frames, and the specified maximum quantity of interpolable frames as the quantity M of to-be-interpolated frames.

5. The data processing method according to claim 4, wherein the predicted quantity of interpolable frames is calculated based on the receiving time, the second time, and the average drawing and rendering duration according to the following formula:
Predicted quantity of interpolable frames ≤ (receiving time - second time)/average drawing and rendering duration.

6. The data processing method according to claim 1, wherein the data processing method further comprises:
when the first application is cold started, obtaining a package name of the first application;
determining an application type of the first application based on the package name; and
when the application type of the first application matches a specified application type that supports frame interpolation, when the drawing and rendering duration of the N^{th} frame is greater than one VSync signal cycle, after the drawing and rendering of the N^{th} frame are completed, performing the steps of obtaining a quantity of lost frames, selecting a minimum value from the quantity of lost frames and a specified maximum quantity of interpolable frames as a quantity of to-be-interpolated frames, and drawing and rendering and displaying M interpolated frames based on a second MOVE event before a second VSync signal arrives.

7. The data processing method according to claim 6, wherein the data processing method further comprises:
determining, based on reporting point information corresponding to the input event, a control that is in the first interface and on which the input event acts; and
when the control that is acted on is a RecyclerView control or a ListView control, when the drawing and rendering duration of the N^{th} frame is greater than one VSync signal cycle, after the drawing and rendering of the N^{th} frame are completed, performing the steps of obtaining a quantity of lost frames, selecting a minimum value from the quantity of lost frames and a specified maximum quantity of interpolable frames as a quantity of to-be-interpolated frames, and drawing and rendering and displaying M interpolated frames based on a second MOVE event before a second VSync signal arrives.

8. The data processing method according to claim 7, wherein the data processing method further comprises:
in the process of drawing and rendering the N^{th} frame, determining a quantity of layers that need to be drawn and rendered; and
when the quantity of layers is 1, when the drawing and rendering duration of the N^{th} frame is greater than one VSync signal cycle, after the drawing and rendering of the N^{th} frame are completed, performing the steps of obtaining a quantity of lost frames, selecting a minimum value from the quantity of lost frames and a specified maximum quantity of interpolable frames as a quantity of to-be-interpolated frames, and drawing and rendering and displaying M interpolated frames based on a second MOVE event before a second VSync signal arrives.

9. The data processing method according to claim 8, wherein the data processing method further comprises:
when a sliding distance corresponding to a MOVE event extracted, based on timestamps of two adjacent VSync signals, from the input event corresponding to the sliding operation is greater than a minimum sliding distance threshold, when the drawing and rendering duration of the N^{th} frame is greater than one VSync signal cycle, after the drawing and rendering of the N^{th} frame are completed, performing the steps of obtaining a quantity of lost frames, selecting a minimum value from the quantity of lost frames and a specified maximum quantity of interpolable frames as a quantity of to-be-interpolated frames, and drawing and rendering and displaying M interpolated frames based on a second MOVE event before a second VSync signal arrives.

10. The data processing method according to claim 1, wherein the data processing method further comprises:
when the drawing and rendering duration of the N^{th} frame is not greater than one VSync signal cycle, and the N^{th} frame is the first frame of a drawing and rendering operation, after the drawing and rendering of the N^{th} frame are completed, offsetting the N^{th} frame by a specified offset, to obtain an (N+1)^{th} frame; and
drawing and rendering the (N+1)^{th} frame before the second VSync signal arrives, and displaying the (N+1)^{th} frame.

11. The data processing method according to claim 10, wherein the data processing method further comprises:
when an event extracted, based on a timestamp of a third VSync signal, from the input event corresponding to the sliding operation is a DOWN event, determining that the N^{th} frame is the first frame of the drawing and rendering operation, wherein
the third VSync signal is a VSync signal that is received before the first VSync signal and that is adjacent to the first VSync signal.

12. A terminal device (100), wherein the terminal device (100) comprises a memory (121) and a processor (110), wherein the memory (121) is coupled to the processor (110), the memory (121) stores program instructions, and when the program instructions are executed by the processor (110), the terminal device (100) is enabled to perform the data processing method according to any one of claims 1 to 11.

13. A computer-readable storage medium, comprising a computer program, wherein when the computer program is run on a terminal device (100), the terminal device (100) performs the data processing method according to any one of claims 1 to 11.

## Patentansprüche

1. Datenverarbeitungsverfahren, wobei das Datenverarbeitungsverfahren umfasst:
Anzeigen (S201) einer ersten Schnittstelle einer ersten Anwendung;
als Reaktion auf eine Wischoperation auf der ersten Schnittstelle, Erhalten (S202) eines Eingabeereignisses, das der Wischoperation entspricht;
Erhalten (S203) eines ersten VSync-Signals, sowie Zeichnen und Rendern eines N^{ten} Frames basierend auf einem ersten MOVE-Ereignis, wobei das erste MOVE-Ereignis basierend auf einem Zeitstempel des ersten VSync-Signals aus dem Eingabeereignis extrahiert wird, das der Wischoperation entspricht;
wenn eine Zeichnungs- und Renderdauer des N^{ten} Frames größer als ein VSync-Signalzyklus ist, nach Abschluss des Zeichnens und Renderns des N^{ten} Frames, Erhalten (S204) einer Anzahl verlorener Frames und Anzeigen des N^{ten} Frames;
Auswählen (S205) eines Minimalwerts aus der Anzahl verlorener Frames und einer spezifizierten maximalen Anzahl interpolierbarer Frames als eine Anzahl M von zu interpolierenden Frames; und
Zeichnen, Rendern und Anzeigen (S206) von M interpolierten Frames basierend auf einem zweiten MOVE-Ereignis, bevor ein zweites VSync-Signal eintrifft, und Anzeigen der M interpolierten Frames, wobei das zweite VSync-Signal das erste VSync-Signal ist, das nach Abschluss des Zeichnens und Renderns des N^{ten} Frames empfangen wird, und das zweite MOVE-Ereignis basierend auf Zeitstempeln aller oder einiger VSync-Signale, die während des Zeichnens und Renderns des N^{ten} Frames empfangen wurden, aus dem Eingabeereignis extrahiert wird, das der Wischoperation entspricht.

2. Datenverarbeitungsverfahren nach Anspruch 1, wobei das Erhalten (204) der Anzahl verlorener Frames umfasst:
Bestimmen eines ersten Zeitpunkts, zu dem das Zeichnen und Rendern des N^{ten} Frames beginnt, und eines zweiten Zeitpunkts, zu dem das Zeichnen und Rendern des N^{ten} Frames endet; und
Berechnen der Anzahl verlorener Frames basierend auf dem ersten Zeitpunkt, dem zweiten Zeitpunkt und einer spezifizierten Zeichnungs- und Renderdauer, die dem N^{ten} Frame entspricht, wobei die spezifizierte Zeichnungs- und Renderdauer ein VSync-Signalzyklus ist.

3. Datenverarbeitungsverfahren nach Anspruch 2, wobei die Anzahl verlorener Frames basierend auf dem ersten Zeitpunkt, dem zweiten Zeitpunkt und der spezifizierten Zeichnungs- und Renderdauer, die dem N^{ten} Frame entspricht, gemäß der folgenden Formel berechnet wird: 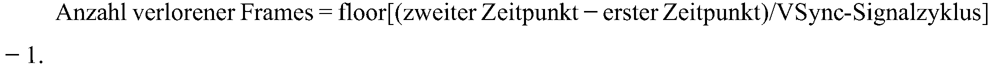 Anzahl verlorener Frames = floor[(zweiter Zeitpunkt - erster Zeitpunkt)/VSync-Signalzyklus] - 1.

4. Datenverarbeitungsverfahren nach Anspruch 2, wobei das Auswählen (S205) des Minimalwerts aus der Anzahl der verlorenen Frames und der spezifizierten maximalen Anzahl der interpolierbaren Frames als die Anzahl M der zu interpolierenden Frames umfasst:
Bestimmen einer Empfangszeit des zweiten VSync-Signals basierend auf dem VSync-Signalzyklus;
Bestimmen, basierend auf einer Zeichnungs- und Renderdauer von N Frames, deren Zeichnen und Rendern abgeschlossen ist, einer durchschnittlichen Zeichnungs- und Renderdauer jedes der N Frames, deren Zeichnen und Rendern abgeschlossen ist;
Berechnen einer vorhergesagten Anzahl von interpolierbaren Frames basierend auf der Empfangszeit, dem zweiten Zeitpunkt und der durchschnittlichen Zeichnungs- und Renderdauer; und
Auswählen eines Minimalwerts aus der vorhergesagten Anzahl von interpolierbaren Frames, der Anzahl der verlorenen Frames und der spezifizierten maximalen Anzahl der interpolierbaren Frames als die Anzahl M der zu interpolierenden Frames.

5. Datenverarbeitungsverfahren nach Anspruch 4, wobei die vorhergesagte Anzahl der interpolierbaren Frames basierend auf der Empfangszeit, dem zweiten Zeitpunkt und der durchschnittlichen Zeichnungs- und Renderdauer gemäß der folgenden Formel berechnet wird:
Vorhergesagte Anzahl der interpolierbaren Frames ≤ (Empfangszeit - zweiter Zeitpunkt) / durchschnittliche Zeichnungs- und Renderdauer.

6. Das Datenverarbeitungsverfahren nach Anspruch 1, wobei das Datenverarbeitungsverfahren ferner umfasst:
wenn die erste Anwendung kalt gestartet wird, Erhalten eines Paketnamens der ersten Anwendung;
Bestimmen eines Anwendungstyps der ersten Anwendung basierend auf dem Paketnamen; und
wenn der Anwendungstyp der ersten Anwendung mit einem festgelegten Anwendungstyp übereinstimmt, der Frame-Interpolation unterstützt, wenn die Zeichnungs- und Renderdauer des N^{ten} Frames größer als ein VSync-Signalzyklus ist, nach Abschluss des Zeichen- und Rendering-Vorgangs des N^{ten} Frames, Durchführen der Schritte des Erhaltens einer Anzahl verlorener Frames, Auswählen eines Minimalwerts aus der Anzahl der verlorenen Frames und einer festgelegten maximalen Anzahl der interpolierbaren Frames als Anzahl der zu interpolierenden Frames, sowie Zeichnen, Rendern und Anzeigen von M interpolierten Frames basierend auf einem zweiten MOVE-Ereignis, bevor ein zweites VSync-Signal eintrifft.

7. Datenverarbeitungsverfahren nach Anspruch 6, wobei das Datenverarbeitungsverfahren ferner umfasst:
Bestimmen eines Steuerelements, das sich in der ersten Schnittstelle befindet und auf das das Eingabeereignis einwirkt, basierend auf Meldepunktinformationen, die dem Eingabeereignis entsprechen; und
wenn es sich bei dem betätigten Steuerelement um ein RecyclerView-Steuerelement oder ein ListView-Steuerelement handelt, und wenn die Zeichnungs- und Renderdauer des N^{ten} Frames größer als ein VSync-Signalzyklus ist, werden nach Abschluss des Zeichnens und Renderns des N^{ten} Frames die Schritte durchgeführt: Ermitteln einer Anzahl verlorener Frames, Auswählen eines Minimalwerts aus der Anzahl verlorener Frames und einer spezifizierten maximalen Anzahl interpolierbarer Frames als Anzahl der zu interpolierenden Frames, sowie Zeichnen, Rendern und Anzeigen von M interpolierten Frames basierend auf einem zweiten MOVE-Ereignis, bevor ein zweites VSync-Signal eintrifft.

8. Datenverarbeitungsverfahren nach Anspruch 7, wobei das Datenverarbeitungsverfahren ferner umfasst:
während des Prozesses des Zeichnens und Renderns des N^{ten} Frames, Bestimmen einer Anzahl von Ebenen, die gezeichnet und gerendert werden müssen; und
wenn die Anzahl der Ebenen 1 beträgt, wenn die Zeichnungs- und Renderdauer des N^{ten} Frames größer als ein VSync-Signalzyklus ist, werden nach Abschluss des Zeichnens und Renderns des N^{ten} Frames die Schritte durchgeführt: Ermitteln einer Anzahl verlorener Frames, Auswählen eines Minimalwerts aus der Anzahl verlorener Frames und einer spezifizierten maximalen Anzahl interpolierbarer Frames als Anzahl der zu interpolierenden Frames, sowie Zeichnen, Rendern und Anzeigen von M interpolierten Frames basierend auf einem zweiten MOVE-Ereignis, bevor ein zweites VSync-Signal eintrifft.

9. Datenverarbeitungsverfahren nach Anspruch 8, wobei das Datenverarbeitungsverfahren ferner umfasst:
wenn eine Wischdistanz, die einem MOVE-Ereignis entspricht, das basierend auf Zeitstempeln von zwei benachbarten VSync-Signalen aus dem der Wischoperation entsprechenden Eingabeereignis extrahiert wurde, größer als ein minimaler Wischdistanz-Schwellenwert ist, wenn die Zeichnungs- und Renderdauer des N^{ten} Frames größer als ein VSync-Signalzyklus ist, werden nach Abschluss des Zeichnens und Renderns des N^{ten} Frames die Schritte durchgeführt: Ermitteln einer Anzahl verlorener Frames, Auswählen eines Minimalwerts aus der Anzahl verlorener Frames und einer spezifizierten maximalen Anzahl interpolierbarer Frames als Anzahl der zu interpolierenden Frames, sowie Zeichnen, Rendern und Anzeigen von M interpolierten Frames basierend auf einem zweiten MOVE-Ereignis, bevor ein zweites VSync-Signal eintrifft.

10. Datenverarbeitungsverfahren nach Anspruch 1, wobei das Datenverarbeitungsverfahren ferner umfasst:
wenn die Zeichnungs- und Renderdauer des N^{ten} Frames nicht größer als ein VSync-Signalzyklus ist und der N^{ten} Frame der erste Frame eines Zeichnungs- und Rendering-Vorgangs ist, wird nach Abschluss des Zeichnens und Renderns des N^{ten} Frames der N^{ten} Frame um einen spezifizierten Offset versetzt, um einen (N+1)^{ten} Frame zu erhalten; und
Zeichnen und Rendern des (N+1)^{ten} Frames, bevor das zweite VSync-Signal eintrifft, und Anzeigen des (N+1)^{ten} Frames.

11. Datenverarbeitungsverfahren nach Anspruch 10, wobei das Datenverarbeitungsverfahren ferner umfasst:
wenn ein Ereignis, das basierend auf einem Zeitstempel eines dritten VSync-Signals aus dem der Wischoperation entsprechenden Eingabeereignis extrahiert wurde, ein DOWN-Ereignis ist, Bestimmen, dass der N^{ten} Frame der erste Frame des Zeichen- und Rendervorgangs ist, wobei
das dritte VSync-Signal ein VSync-Signal ist, das vor dem ersten VSync-Signal empfangen wird und das dem ersten VSync-Signal benachbart ist.

12. Endgerät (100), wobei das Endgerät (100) einen Speicher (121) und einen Prozessor (110) umfasst, wobei der Speicher (121) mit dem Prozessor (110) gekoppelt ist, der Speicher (121) Programmanweisungen speichert und, wenn die Programmanweisungen durch den Prozessor (110) ausgeführt werden, das Endgerät (100) in die Lage versetzt wird, das Datenverarbeitungsverfahren nach einem der Ansprüche 1 bis 11 durchzuführen.

13. Computerlesbares Speichermedium, das ein Computerprogramm umfasst, wobei, wenn das Computerprogramm auf einem Endgerät (100) ausgeführt wird, das Endgerät (100) das Datenverarbeitungsverfahren nach einem der Ansprüche 1 bis 11 durchführt.

## Revendications

1. Procédé de traitement de données, dans lequel le procédé de traitement de données comprend :
l'affichage (S201) d'une première interface d'une première application ;
en réponse à une opération de glissement agissant sur la première interface, l'obtention (S202) d'un événement d'entrée correspondant àl'opération de glissement ;
l'obtention (S203) d'un premier signal VSync, ainsi que le dessin et le rendu d'une N^{ième} trame sur la base d'un premier événement MOVE, dans lequel le premier événement MOVE est extrait, sur la base d'un horodatage du premier signal VSync, à partir de l'événement d'entrée correspondant à l'opération de glissement ;
lorsque la durée de dessin et de rendu de la N^{ième} trame est supérieure à un cycle de signal VSync, une fois le dessin et le rendu de la N^{ième} trame terminés, l'obtention (S204) d'une quantité de trames perdues, et l'affichage de la N^{ième} trame ;
la sélection (S205) d'une valeur minimale parmi la quantité de trames perdues et une quantité maximale spécifiée de trames interpolables en tant que quantité M de trames à interpoler ; et
le dessin, le rendu et l'affichage (S206) de M trames interpolées sur la base d'un second événement MOVE avant l'arrivée d'un second signal VSync, et l'affichage des M trames interpolées, dans lequel le second signal VSync est le premier signal VSync reçu après que le dessin et le rendu de la N^{e} trame sont terminés, et le second événement MOVE est extrait, sur la base des horodatages de tout ou partie des signaux VSync reçus au cours d'un processus de dessin et de rendu de la N^{e} trame, à partir de l'événement d'entrée correspondant à l'opération de glissement.

2. Procédé de traitement de données selon la revendication 1, dans lequel l'obtention (204) de la quantité de trames perdues comprend :
la détermination d'un premier instant auquel le dessin et le rendu de la N^{ième} trame commencent et d'un second instant auquel le dessin et le rendu de la N^{ième} trame se terminent ; et
le calcul de la quantité de trames perdues sur la base du premier instant, du second instant et d'une durée de dessin et de rendu spécifiée correspondant à la N^{ième} trame, dans lequel la durée de dessin et de rendu spécifiée est un cycle de signal VSync.

3. Procédé de traitement de données selon la revendication 2, dans lequel la quantité de trames perdues est calculée selon la formule suivante sur la base du premier instant, du second instant et de la durée de dessin et de rendu spécifiée correspondant à la N^{ième} trame : $\begin{matrix}Quantité de trames perdues = floor \left[\left(second instant-premier instant\right)/cycle de signal VSync\right] \\ - 1 .\end{matrix}$

4. Procédé de traitement de données selon la revendication 2, dans lequel la sélection (S205) de la valeur minimale parmi la quantité de trames perdues et la quantité maximale spécifiée de trames interpolables en tant que quantité M de trames à interpoler comprend :
la détermination du temps de réception du second signal VSync sur la base du cycle de signal VSync ;
la détermination, sur la base de la durée de dessin et de rendu de N trames dont le dessin et le rendu sont terminés, de la durée moyenne de dessin et de rendu de chacune des N trames dont le dessin et le rendu sont terminés ;
le calcul d'une quantité prédite de trames interpolables sur la base du temps de réception, du second temps et de la durée moyenne de dessin et de rendu ; et
la sélection d'une valeur minimale parmi la quantité prédite de trames interpolables, la quantité de trames perdues et la quantité maximale spécifiée de trames interpolables en tant que quantité M de trames à interpoler.

5. Procédé de traitement de données selon la revendication 4, dans lequel la quantité prédite de trames interpolables est calculée sur la base du temps de réception, du second temps et de la durée moyenne de dessin et de rendu selon la formule suivante :
Quantité prédite de trames interpolables ≤ (temps de réception - second temps)/durée moyenne de dessin et de rendu.

6. Procédé de traitement de données selon la revendication 1, dans lequel le procédé de traitement de données comprend en outre :
lorsque la première application est démarrée à froid, l'obtention d'un nom de paquet de la première application ;
la détermination d'un type d'application de la première application sur la base du nom de paquet ; et
lorsque le type d'application de la première application correspond à un type d'application spécifié qui prend en charge l'interpolation de trames, lorsque la durée de dessin et de rendu de la N^{ième} trame est supérieure à un cycle de signal VSync, une fois le dessin et le rendu de la N^{ième} trame terminés, l'exécution des étapes consistant à obtenir une quantité de trames perdues, sélectionner une valeur minimale parmi la quantité de trames perdues et une quantité maximale spécifiée de trames interpolables en tant que quantité de trames à interpoler, et dessiner, rendre et afficher M trames interpolées sur la base d'un second événement MOVE avant l'arrivée d'un second signal VSync.

7. Procédé de traitement de données selon la revendication 6, dans lequel le procédé de traitement de données comprend en outre :
la détermination, sur la base d'informations de points de rapport correspondant à l'événement d'entrée, d'un contrôle qui se trouve dans la première interface et sur lequel l'événement d'entrée agit ; et
lorsque le contrôle sur lequel une action est effectuée est un contrôle RecyclerView ou un contrôle ListView, lorsque la durée de dessin et de rendu de la N^{ième} trame est supérieure à un cycle de signal VSync, après que le dessin et le rendu de la N^{ième} trame sont terminés, exécuter les étapes consistant à obtenir une quantité de trames perdues, à sélectionner une valeur minimale parmi la quantité de trames perdues et une quantité maximale spécifiée de trames interpolables en tant que quantité de trames à interpoler, et à dessiner, rendre et afficher M trames interpolées sur la base d'un second événement MOVE avant qu'un second signal VSync n'arrive.

8. Procédé de traitement de données selon la revendication 7, dans lequel le procédé de traitement de données comprend en outre :
dans le processus de dessin et de rendu de la N^{ième} trame, déterminer une quantité de couches qui doivent être dessinées et rendues ; et
lorsque la quantité de couches est de 1, lorsque la durée de dessin et de rendu de la N^{ième} trame est supérieure à un cycle de signal VSync, après que le dessin et le rendu de la N^{ième} trame sont terminés, exécuter les étapes consistant à obtenir une quantité de trames perdues, à sélectionner une valeur minimale parmi la quantité de trames perdues et une quantité maximale spécifiée de trames interpolables en tant que quantité de trames à interpoler, et à dessiner, rendre et afficher M trames interpolées sur la base d'un second événement MOVE avant qu'un second signal VSync n'arrive.

9. Procédé de traitement de données selon la revendication 8, dans lequel le procédé de traitement de données comprend en outre :
lorsqu'une distance de glissement correspondant à un événement MOVE extrait, sur la base d'horodatages de deux signaux VSync adjacents, de l'événement d'entrée correspondant à l'opération de glissement est supérieure à un seuil de distance de glissement minimale, lorsque la durée de dessin et de rendu de la N^{ième} trame est supérieure à un cycle de signal VSync, après que le dessin et le rendu de la N^{ième} trame sont terminés, exécuter les étapes consistant à obtenir une quantité de trames perdues, à sélectionner une valeur minimale parmi la quantité de trames perdues et une quantité maximale spécifiée de trames interpolables en tant que quantité de trames à interpoler, et à dessiner, rendre et afficher M trames interpolées sur la base d'un second événement MOVE avant qu'un second signal VSync n'arrive.

10. Procédé de traitement de données selon la revendication 1, dans lequel le procédé de traitement de données comprend en outre :
lorsque la durée de dessin et de rendu de la N^{ième} trame n'est pas supérieure à un cycle de signal VSync, et que la N^{ième} trame est la première trame d'une opération de dessin et de rendu, après que le dessin et le rendu de la N^{ième} trame sont terminés, décaler la N^{ième} trame d'un décalage spécifié, pour obtenir une trame (N+1) ^{ième} ; et
dessiner et effectuer le rendu de la (N+1)^{ième} trame avant que le deuxième signal VSync n'arrive, et afficher la (N+1) ^{ième} trame.

11. Procédé de traitement de données selon la revendication 10, dans lequel le procédé de traitement de données comprend en outre :
lorsqu'un événement extrait, sur la base d'un horodatage d'un troisième signal VSync, à partir de l'événement d'entrée correspondant à l'opération de glissement est un événement DOWN, déterminer que la N^{ième} trame est la première trame de l'opération de dessin et de rendu, dans lequel
le troisième signal VSync est un signal VSync qui est reçu avant le premier signal VSync et qui est adjacent au premier signal VSync.

12. Dispositif terminal (100), dans lequel le dispositif terminal (100) comprend une mémoire (121) et un processeur (110), dans lequel la mémoire (121) est couplée au processeur (110), la mémoire (121) stocke des instructions de programme, et lorsque les instructions de programme sont exécutées par le processeur (110), le dispositif terminal (100) est activé pour exécuter le procédé de traitement de données selon l'une quelconque des revendications 1 à 11.

13. Support de stockage lisible par ordinateur, comprenant un programme informatique, dans lequel lorsque le programme informatique est exécuté sur un dispositif terminal (100), le dispositif terminal (100) exécute le procédé de traitement de données selon l'une quelconque des revendications 1 à 11.
